# EUROPEAN PATENT APPLICATION

(11) **EP 4 672 186 A1**
(43) Date of publication of application: **31.12.2025**
(21) Application number: 25182015.5
(22) Date of filing: 11.06.2025
(51) Int. Cl.: G07C 9/00, B60R 25/04, B60R 25/102, B60R 25/24, B60R 25/30

(54) **MONITORING SYSTEM**

(30) Priority: 26.06.2024 JP 2024103195
(71) Applicant: KUBOTA CORPORATION, Osaka-shi, Osaka 556-8601 (JP)
(72) Inventor: WATANABE, Sho, Sakai-shi, Osaka, 5900908 (JP); HAYASHI, Sotaro, Sakai-shi, Osaka, 5900908 (JP)
(74) Representative: Müller-Boré & Partner Patentanwälte PartG mbB

(57) **Abstract**

A monitoring system (100) includes a remote communication terminal (50), and a working vehicle (1) including a monitored mode in which monitored operation monitored by the remote communication terminal (50) is allowed and a manual mode in which a manual operation is allowed. The working vehicle (1) includes a controller (60) configured or programmed to, upon receiving a permission signal from the remote communication terminal (50) when the working vehicle (1) is in the monitored mode, bring the working vehicle (1) into a permission mode in which the monitored mode is allowed to transition to the manual mode.

## Description

### BACKGROUND OF THE INVENTION

### Field of the Invention

The present invention relates to monitoring systems to monitor working vehicles.

### Description of the Related Art

Japanese Unexamined Patent Application Publication No. 2016-76801 discloses a monitoring system to allow an agricultural working vehicle, a management server, and a terminal device of a related party (a user, a distributor and/or the like) to communicate with each other via a communicator, in which the agricultural working vehicle includes a position detector, a voltage sensor for a battery, a timer and a controller, the controller is configured or programmed to, during power-saving standby mode during which a key switch is off, be automatically activated at every set time and send the current position of the agricultural working vehicle, the voltage of the battery and date and time to the management server via the communicator, and a remote monitor included in the management server is operable to, when not receiving data from the controller at the set time, determine that a theft has occurred and report the theft to the terminal device of the related party.

### SUMMARY OF THE INVENTION

The system according to Japanese Unexamined Patent Application Publication No. 2016-76801 is merely configured to report that the monitored working vehicle under monitoring has been stolen to the related party in a remote place, and therefore the system cannot prevent the theft of the working vehicle.

It is an object of the present invention to provide monitoring systems to eliminate or reduce the likelihood that a working vehicle in a monitored mode will be stolen, in view of the above-mentioned problems.

A monitoring system according to an example embodiment of the present invention includes a remote communication terminal, and a working vehicle including a monitored mode in which a monitored operation monitored by the remote communication terminal is allowed and a manual mode in which a manual operation is allowed, wherein the working vehicle includes a controller configured or programmed to, upon receiving a permission signal from the remote communication terminal when the working vehicle is in the monitored mode, bring the working vehicle into a permission mode in which the monitored mode is allowed to transition to the manual mode.

The monitored mode may include a remote mode in which an automatic operation or a remote operation remotely monitored by the remote communication terminal is allowed.

The controller may be configured or programmed to cause a transition to the manual mode when an operation is performed or a detection is made to cause a transition to the manual mode while the working vehicle is in the permission mode.

The working vehicle may include a sensor to detect an entrance of a person into the working vehicle, and a communicator to transmit an entrance detection signal to the remote communication terminal upon detection of the entrance by the sensor. The remote communication terminal may include a determiner to determine whether or not to cause a transition to the permission mode when receiving the entrance detection signal while the working vehicle is in the remote mode.

The working vehicle may include a imager to capture an image of the person upon detection of the entrance by the sensor. The communicator may be configured or programmed to transmit the entrance detection signal and the captured image of the person captured by the imager to the remote communication terminal upon detection of the entrance by the sensor. The determiner may be configured or programmed to determine whether or not to cause a transition to the permission mode based on the entrance detection signal and the captured image.

The remote communication terminal may include a display to display the captured image. The determiner may be configured or programmed to determine whether or not to cause a transition to the permission mode according to a selecting instruction from a user of the remote communication terminal who has checked the captured image.

The determiner may be configured or programmed to determine whether or not to cause a transition to the permission mode based on a result of image recognition of the captured image.

The remote communication terminal may include a user authenticator, and may be allowed to be operated when a user is authenticated as an authorized user by the user authenticator.

The monitoring system may further include a short-range communication terminal to control the working vehicle from a location within a predetermined range from the working vehicle. The working vehicle may include a communicator to communicate with the short-range communication terminal. The controller may be configured or programmed to cause a transition from the remote mode to the manual mode upon receiving an operation signal from the short-range communication terminal via the communicator even when the controller has not received the permission signal from the remote communication terminal.

The short-range communication terminal may include a user authenticator and may be operable to transmit an operation signal corresponding to an operation of the short-range communication terminal to the working vehicle when a user is authenticated as an authorized user in the user authenticator.

The communicator may be configured or programmed to transmit information indicating that the working vehicle is being controlled by the short-range communication terminal to the remote communication terminal upon receiving the operation signal from the short-range communication terminal. The remote communication terminal may be operable to provide a notification indicating that the working vehicle is being controlled by the short-range communication terminal.

The working vehicle may include a door for entrance and exit and a locking mechanism to lock the door. The controller may be configured or programmed to control the locking mechanism to lock the door based on an instruction to enter the remote mode issued by the remote communication terminal.

The controller may be configured or programmed to unlock the door locked by the locking mechanism based on an unlocking signal from the remote communication terminal.

The monitoring system may further include a short-range communication terminal to control the working vehicle from a location within a predetermined range from the working vehicle. The controller may be configured or programmed to unlock the door locked by the locking mechanism upon receiving an operation signal from the short-range communication terminal.

The working vehicle may include a prime mover and a user authenticator. The controller may be configured or programmed to permit startup of the prime mover when a user is authenticated as an authorized user by the user authenticator and not permit the startup of the prime mover when the user is not authenticated as an authorized user.

With an example embodiment of the present invention, it is possible to eliminate or reduce the likelihood that a working vehicle in a monitored mode will be stolen.

The above and other elements, features, steps, characteristics and advantages of the present invention will become more apparent from the following detailed description of the example embodiments with reference to the attached drawings.

### BRIEF DESCRIPTION OF THE DRAWINGS

A more complete appreciation of example embodiments of the present invention and many of the attendant advantages thereof will be readily obtained as the same becomes better understood by reference to the following detailed description when considered in connection with the accompanying drawings described below.
FIG. 1 is a block diagram of a monitoring system of an example embodiment of the present invention.
FIG. 2 is a perspective view of a linkage.
FIG. 3 illustrates an example of a travel route.
FIG. 4 illustrates an example of a travel control screen.
FIG. 5A illustrates an automatic operation of a working vehicle.
FIG. 5B illustrate an automatic operation of a working vehicle.
FIG. 5C illustrates an automatic operation of a working vehicle.
FIG. 5D illustrates an automatic operation of a working vehicle.
FIG. 6 illustrates an example of a short-range communication terminal.
FIG. 7 is a flowchart showing an anti-theft process for a working vehicle in a monitored mode.
FIG. 8 is a flowchart showing an anti-theft process different from FIG. 7.
FIG. 9 is a flowchart showing an anti-theft process different from FIG. 8.
FIG. 10 is a flowchart showing an anti-theft process different from FIG. 7.
FIG. 11 is a flowchart showing an anti-theft process different from FIG. 10.
FIG. 12 is a flowchart showing an anti-theft process for a working vehicle in a monitored mode.
FIG. 13 is a flowchart showing an anti-theft process different from FIG. 12.
FIG. 14 is a flowchart showing an anti-theft process different from FIG. 13.
FIG. 15 is a block diagram of a monitoring system of a variation of an example embodiment of the present invention.
FIG. 16 is a side view of a working vehicle.

### DESCRIPTION OF THE EXAMPLE EMBODIMENTS

Example embodiments will now be described with reference to the accompanying drawings, wherein like reference numerals designate corresponding or identical elements throughout the various drawings. The drawings are to be viewed in an orientation in which the reference numerals are viewed correctly.

The following description discusses example embodiments of the present invention with reference to drawings.

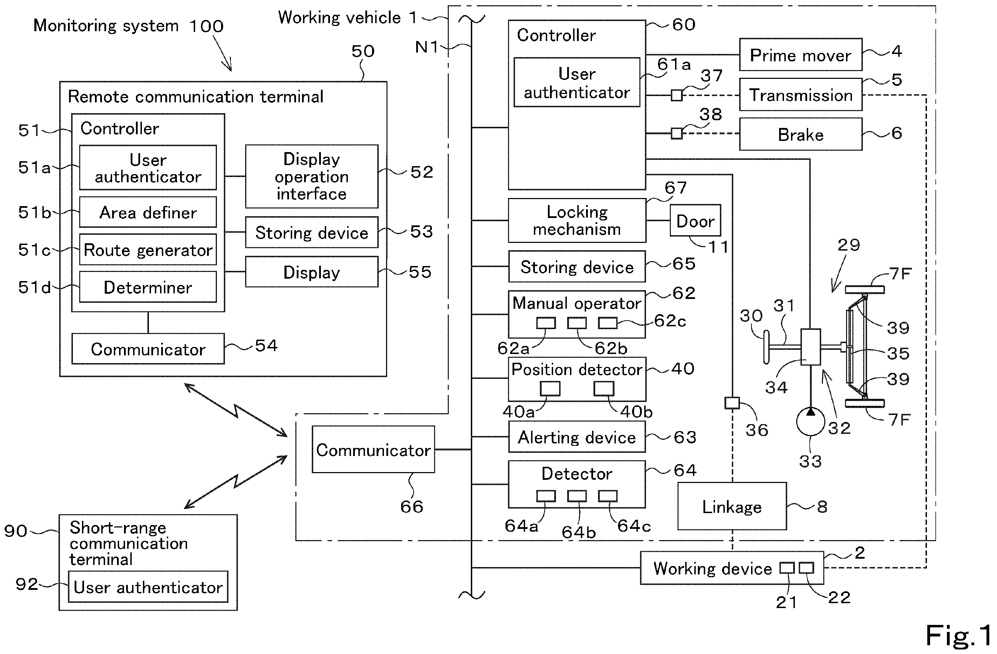

The following discusses a working vehicle 1 and a monitoring system 100 of the present example embodiment. FIG. 1 is a block diagram of a monitoring system of an example embodiment. The monitoring system 100 includes a working vehicle 1 and a remote communication terminal 50 to remotely control the working vehicle 1. The monitoring system 100 may further include a short-range communication terminal 90. The monitoring system 100 monitors the working vehicle 1 in a monitored mode. The remote communication terminal 50 provides assistance in performing agricultural work using a working device 2 while allowing the working vehicle 1 to travel in an agricultural field under remote monitoring.

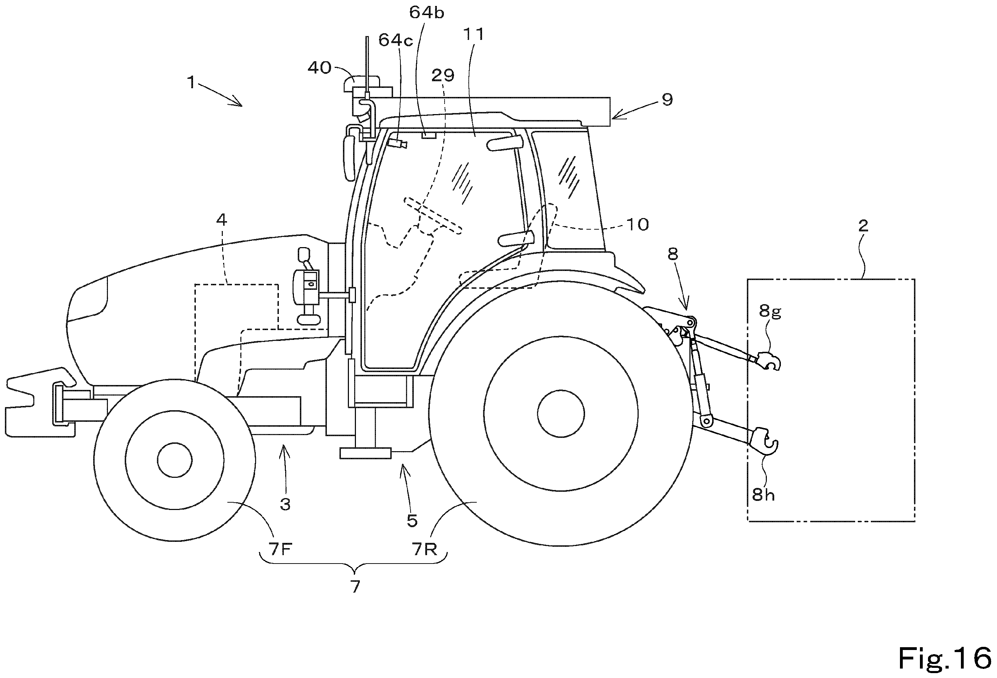

The following first discusses the working vehicle (agricultural machine) 1 of the present example embodiment. FIG. 16 is a side view of the working vehicle. In the present example, the working vehicle is a tractor, for example. It is noted that the working vehicle 1 is not limited to the tractor, and may be some other agricultural machine such as a rice transplanter or a combine, or an agricultural machine other than the tractor to perform agricultural work .

The working vehicle 1 includes a traveling vehicle body 3, a prime mover 4, a transmission 5 and a traveling device 7. Front wheels 7F of the traveling device 7 may be tire wheels or crawler wheels. Rear wheels 7R of the traveling device 7 may be tire wheels or crawler wheels. The prime mover 4 includes a diesel engine, an electronic motor and/or the like. In the present example embodiment, the prime mover 4 includes a diesel engine. The transmission 5 is operable to switch between forward travel and rearward travel of the traveling device 7, as well as to change the propelling force of the traveling device 7 by changing speed stages. The driving force from the prime mover 4 is transmitted to the traveling device 7 via the transmission 5, and the traveling device 7 is driven thereby, thus causing the traveling vehicle body 3 to travel forward or backward. In FIG. 16, the left side is the front of the traveling vehicle body 3 and the right side is the rear of the traveling vehicle body 3. In FIG. 16, the far side is the right side of the traveling vehicle body 3 and the near side is the left side of the traveling vehicle body 3.

A cabin 9 is provided on the traveling vehicle body 3. An operator's seat 10 is provided inside the cabin 9. The cabin 9 includes a door 11 for entrance and exit at least one of a left side portion or a right side portion thereof. The user (a driver, a worker or the like) opens the door 11, enters the cabin 9, sits in the operator's seat 10, and operates the working vehicle 1 and operates the working device 2 to perform work.

The traveling vehicle body 3 is provided, at a rear portion thereof, with a linkage 8 including a three-point linkage and/or the like. The linkage 8 links the working device 2 to the traveling vehicle body 3 to perform agricultural work. Specifically, by linking the working device 2 to connectors 8g and 8h of the linkage 8, the working device 2 and the traveling vehicle body 3 are connected, allowing the working vehicle 1 to tow the working device 2. Thus, the working vehicle 1 is operable to attach the working device 2 thereto.

The working device 2 performs ground work on the agricultural field. In the present example, examples of the working device 2 include tillers (rotary tillers) to perform tillage on an agricultural field, stubble cultivators to perform stubble cultivation, harrows (drive harrows) to perform puddling, spreaders to spread fertilizer, agricultural chemicals or the like, seeders to sow seeds, transplanters to transplant seedlings, and harvesters to harvest.

As shown in FIG. 1, the working vehicle 1 includes a manual operator 62, the prime mover 4, the transmission 5, a brake 6, a steering system 29, the linkage 8, a position detector 40, an alerting device 63, a detector 64, a storing device (memory and/or storage) 65 and a communicator 66. The communicator 66 includes a communication circuit to communicate wirelessly with the remote communication terminal 50. The communicator 66 is a communication interface, a communication module or the like to communicate wirelessly with a communicator 54 of the remote communication terminal 50 via a communication network such as the Internet, a cellular phone network and/or some other data communication network.

The working vehicle 1 includes a controller 60 (processing circuit) including one or more processors. The controller 60 is configured or programmed to control the working vehicle 1, and configured or programmed to perform various controls relating to the working vehicle 1. The controller 60 is connected communicably to a plurality of devices provided in or on the working vehicle 1 via an in-vehicle network N1 such as CAN, ISOBUS, LIN, and/or FlexRay. For example, the controller 60 is configured or programmed to perform various controlling processes (controls) such as travel, speed change, braking and steering of the working vehicle 1, work using the working device 2, and the like based on signals (operation signals) input from the manual operator 62, the steering system 29 and the like.

The controller 60 includes one or more memories, analog circuits, digital circuits and/or the like. The one or more memories are configured to store (record) software program(s) to be executed by the one or more processors and various data. The controller 60 is configured or programmed to read software program(s) from the one or more memories and perform various processes based on the software program(s) via one or more processors. The controller 60 may be configured or programmed to perform various processes based on a predetermined logical circuit via the one or more processors.

Examples of the one or more processors include central processing unit (CPU), graphics processing unit (GPU), digital signal processor (DSP), field programmable gate array (FPGA), application specific integrated circuit (ASIC), and the like. The software program(s) may be stored in a storage medium connected communicably to the controller 60 (a nonvolatile memory such as HDD, SSD, CD-ROM, DVD-ROM) or an external server connected via the above-mentioned network(s) to the controller 60, and installed to the one or more memories from one or more of them.

The manual operator 62 includes switch(es), lever(s), pedal(s), other keys, and/or the like to be operated by a driver sitting in the operator's seat 10 or a user (human operator) such as a worker near the working vehicle 1.

The storing device 65 includes a nonvolatile memory and/or the like, and is operable to store various control programs, various data and the like. The storing device 65 is, for example, a hard disc drive (HDD), solid state drive (SSD) and/or the like.

The manual operator 62 includes a mode switch 62a and a lifting/lowering lever 62b. The mode switch 62a is a manual operator to switch the mode of the working vehicle 1. The lifting/lowering lever 62b is a manual operator to be operated by the driver to change the posture, e.g., height, of the working device 2, and is operable to, when operated, be kept in the operated position.

The working vehicle 1 includes a monitored mode in which a monitored operation monitored by the remote communication terminal 50 is allowed and a manual mode in which a manual operation is allowed. The monitored mode includes a remote mode in which an automatic operation or a remote operation remotely monitored by the remote communication terminal 50 is allowed. Specifically, the modes of the working vehicle 1 include the monitored mode, an automatic steering/work mode and the manual mode, which are selectable using the mode switch 62. The monitored mode is a mode in which the working vehicle 1 is operated under monitoring, and is classified broadly into an automatic operation mode (in other words, an automatic traveling/work mode) and a remote operation mode. The controller 60 of the working vehicle 1 is configured or programmed to select the monitored mode based on an instruction signal for the monitored mode from the remote communication terminal 50, select the automatic steering/work mode based on an instruction signal for the automatic steering/work mode, or select the manual mode based on an instruction signal for the manual mode.

The automatic traveling/work mode is a mode in which agricultural work (ground work) is performed by the working device 2 while the working vehicle 1 (traveling vehicle body 3) is traveling in automatic operation. The automatic operation of the working vehicle 1 indicates that the travel speed of the traveling vehicle body 3 is changed automatically and the traveling vehicle body 3 is steered automatically. The remote operation mode is described later.

The automatic steering/work mode is a mode in which agricultural work (ground work) is performed by the working device 2 while the traveling vehicle body 3 is automatically steered. When the working vehicle 1 is in the automatic steering/work mode, by the driver of the working vehicle 1 operating an accelerator or a brake included in the manual operator 62, the travel speed of the traveling vehicle body 3 is changed according to the operation. That is, in the automatic steering/work mode, the travel speed of the traveling vehicle body 3 is changed based on the manual operation.

The working vehicle 1 is operable to, when in the manual mode, be caused to travel by the manual operation and perform ground work using the working device 2 during the travel. The manual operation of the working vehicle 1 indicates that the travel speed of the traveling vehicle body 3 is changed by the driver operating the accelerator or the brake of the manual operator 62 and the traveling vehicle body 3 is steered by the driver operating a steering wheel 30.

The prime mover 4 (engine) is controlled by the controller 60 as to driving, stopping, and the rotation speed thereof. The transmission 5 is connected to a control valve 37. The control valve 37 is a solenoid valve to be actuated based on a control signal transmitted from the controller 60. The control valve 37 is supplied with hydraulic fluid delivered by a hydraulic pump 33. Although the control valve 37 is depicted as a single block in FIG. 1, one or more control valves are provided appropriately depending on the number of hydraulic devices such as hydraulic clutch(es) and/or hydraulic cylinder(s) of the transmission 5.

The brake 6 is connected to a control valve 38. The control valve 38 is a solenoid valve to be actuated based on a control signal transmitted from the controller 60. The control valve 38 is supplied with hydraulic fluid delivered by the hydraulic pump 33. The controller 60 actuates the brake 6 to brake the traveling vehicle body 3 by controlling electrically the switching position and the opening of the control valve 38.

The controller 60 electrically controls the switching position (opening) of the control valve 37 to control driving of the transmission 5. The transmission 5 transmits the driving force of the prime mover 4 to the traveling device 7 to actuate the traveling device 7 to cause the traveling vehicle body 3 to travel forward or rearward. For example, when the working device 2 performs ground work, the transmission 5 transmits the driving force of the prime mover 4 to the working device 2. This increases the force to actuate the working device 2.

The controller 60 communicates with the working device 2 via the in-vehicle network N1. Specifically, the working device 2 includes a controller 21 and a communicator 22. The controller 60 transmits a work instruction to the working device 2 via the in-vehicle network N1. The controller 21 of the working device 2 is configured or programmed to, upon receiving the work instruction via the communicator 22, perform agricultural work (ground work) by controlling the operation of elements of the working device 2 based on the work instruction. The controller 21 of the working device 2 transmits information or data indicating a working status and/or the like to the controller 60 over the in-vehicle network N1 via the communicator 22. The controller 60 detects the working status and/or the like of the working device 2 based on the information or the data received from the working device 2 via the in-vehicle network N1.

Some working devices 2 may not include the controller 21 or the communicator 22. When using such a working device 2, the controller 60 does not perform communication with the working device 2 via the in-vehicle network N1, but controls the operation of the working device 2 by causing the linkage 8 to raise or lower the working device 2 to change the position of the working device 2 (described later) and detects the working status and/or the like of the working device 2.

The steering system 29 includes a steering wheel 30, a steering shaft (rotation shaft) 31, and an assist mechanism (power steering mechanism) 32. The steering wheel 30 is provided inside the cabin 9 (FIG. 16). The steering shaft 31 rotates as the steering wheel 30 is rotated. The assist mechanism 32 assists in steering using the steering wheel 30.

The assist mechanism 32 includes a control valve 34 and a steering cylinder 35. The control valve 34 is a solenoid valve to be actuated based on a control signal transmitted from the controller 60. Specifically, the control valve 34 includes a three-position switching valve to be switched by the movement of a spool or the like. The control valve 34 is supplied with hydraulic fluid delivered by the hydraulic pump 33. The controller 60 electrically controls the switching position and the opening of the control valve 34 to adjust the hydraulic pressure applied to the steering cylinder 35 to extend or retract the steering cylinder 35. The steering cylinder 35 is connected to knuckle arms 39 to change the orientation of the front wheels 7F.

The control valve 34 is switchable also by the rotation of the steering shaft 31. Specifically, when the steering wheel 30 is operated, the steering shaft 31 rotates according to the manner in which the steering wheel 30 is operated, and the switching position and the opening of the control valve 34 are switched. The steering cylinder 35 extends or retracts leftward or rightward with respect to the traveling vehicle body 3 according to the switching position and the opening of the control valve 34. The extension or retraction of the steering cylinder 35 changes the steering direction of the front wheels 7F. It is noted that the above-mentioned steering system 29 is merely an example, and not limited to the above-mentioned configuration.

The working vehicle 1 is operable to be manually steered by manually operating the steering wheel 30 and to be automatically steered by the controller 60. Furthermore, when the transmission 5 or the brake 6 is actuated according to the manual operation of the accelerator or the braking pedal of the manual operator 62, the traveling vehicle body 3 is caused to travel or stop. In addition, the traveling vehicle body 3 is caused to automatically travel and stop by the controller 60 controlling the transmission 5 and the brake 6. The controller 60 controls the control valve 34 to extend or retract the steering cylinder 35, causing the knuckle arms 39 to change the steering direction of the front wheels 7F. In other words, the working vehicle 1 is operable to perform the manual operation in which the driver performs the traveling control and the steering control, the automatic operation in which the controller 60 automatically performs the traveling and the steering, and auto-steer control (also referred to as automatic steering control or semi-automatic operation) in which the controller 60 automatically performs the steering and the driver performs the traveling control.

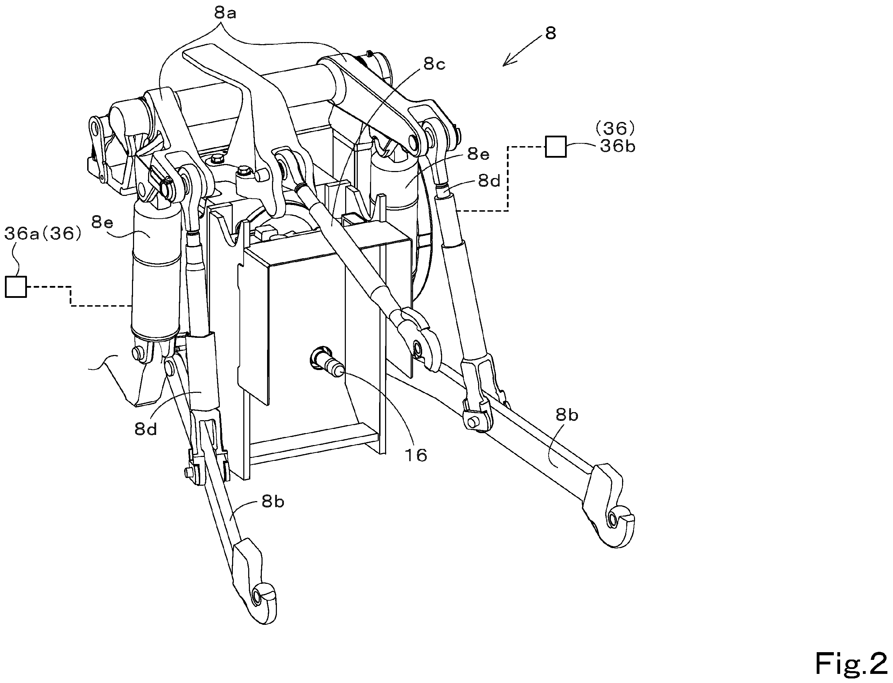

FIG. 2 is a perspective view of the linkage 8. The linkage 8 includes lift arm(s) 8a, lower link(s) 8b, a top link 8c, lift rod(s) 8d, and lift cylinder(s) 8e. Front-end portions of the lift arms 8a are supported by an upper rear portion of a case (transmission case) to store the transmission 5 such that the lift arms 8a are swingable up and down. The lift arms 8a are caused to swing (ascend or descend) by being driven by the lift cylinders 8e. The lift cylinders 8e are hydraulic cylinders. The lift cylinders 8e are connected to a control valve 36 (FIG. 1). The control valve 36 is a solenoid valve to be actuated based on a control signal transmitted from the controller 60. The control valve 36 is supplied with hydraulic fluid delivered by the hydraulic pump 33.

Front-end portions of the lower links 8b shown in FIG. 2 are supported by a lower rear portion of the transmission 5 (FIGS. 1 and 16) such that the lower links 8b are swingable up and down. A front-end portion of the top link 8c is supported, at a position higher than the lower links 8b, by a rear portion of the transmission 5 such that the top link 8c is swingable up and down. The lift rods 8d connect the lift arms 8a and the lower links 8b. Rear-end portions of the lower links 8b and the top link 8c are provided with connectors 8g and 8h to connect the working device 2 thereto.

The control valve 36 shown in FIG. 1 includes a control valve 36a and a control valve 36b shown in FIG. 2. The controller 60 (FIG. 1) electrically controls the switching position and the opening of the control valves 36a and 36b to adjust the hydraulic pressure applied to the lift cylinders 8e to extend or retract the lift cylinders 8e. The extension or retraction of the lift cylinders 8e raises or lowers the lift arms 8a and raises or lowers and the lower links 8b connected to the lift arms 8a via the lift rods 8d. Thus, the working device 2 swings up or down (is raised or lowered) about the front portions of the lower links 8b (opposite ends of the lower links 8b from the connectors 8g and 8h).

The controller 60 controls the prime mover 4, the transmission 5, the brake 6, the traveling device 7, the steering system 29 and the linkage 8 to automatically perform traveling and/or steering of the working vehicle 1 while causing the working device 2 to perform agricultural work for an agricultural field. Specifically, the controller 60 performs the automatic operation in which the controller 60 causes the working device 2 to perform agricultural work while automatically causing the working vehicle 1 to travel. The controller 60 also performs the automatic steering (auto-steering) in which the controller 60 causes the working device 2 to perform agricultural work for an agricultural field while automatically steering the working vehicle 1 and allowing the travel speed of the working vehicle 1 to be manually changed.

The position detector 40 shown in FIG. 1 includes a receiver 40a and an inertial measurement unit (IMU) 40b. The receiver 40a receives satellite signal(s) (positions of positioning satellite(s), transmission time(s), correction information and/or the like) transmitted from a satellite positioning system (positioning satellite(s)) such as D-GPS, GPS, GLONASS, BeiDou, Galileo, Quasi-Zenith Satellite System (Michibiki) or the like. The position detector 40 detects the current position (e.g., latitude, longitude) based on the satellite signals received by the receiver 40a. That is, the position detector 40 is operable to detect the position of the working vehicle 1 (traveling vehicle body 3). The inertial measurement unit 40b includes an acceleration sensor, a gyroscope sensor and/or the like. The inertial measurement unit 40b detects the roll angle, the pitch angle, the yaw angle and/or the like of the traveling vehicle body 3. The alerting device 63 includes a beeper, a speaker, a warning light and/or the like provided in or on the traveling vehicle body 3. The alerting device 63 outputs an alert and a warning using sound or light to people around the traveling vehicle body 3.

The detector 64 includes sensor(s) and/or camera(s) provided at some positions in or on the working vehicle 1 and/or the working device 2, an electronic circuit to process output signal(s) from the sensor(s) and/or the camera(s), and the like. The detector 64 detects the operating status (driven state, stopped state, working position, and/or the like) of each of the elements including the transmission 5, the brake 6, the traveling device 7, the linkage 8, the steering system 29 and the manual operator 62 of the working vehicle 1 based on the output signal(s) from the sensors and/or the like. The detector 64 also detects the operating status of the working device 2 based on the output signal(s) from the sensors and/or the like. The detector 64 includes object detector(s) 64a (object detecting sensor(s)) such as LiDAR, a supersonic sensor and/or the like. The object detectors 64a are provided at a front portion, a rear portion, and left and right side portions of the traveling vehicle body 3. Each object detector 64a detects the presence or absence of objects in the surrounding area of the working vehicle 1, the distance to each object, and/or the like.

The communicator 66 transmits various information relating to the working vehicle 1, the working device 2 and/or the like to the remote communication terminal 50 when monitored operation (automatic operation or remote operation) is performed by the remote communication terminal 50. The various information includes position information (for example, latitude, longitude) of at least one of the working vehicle 1 or the working device 2, device information relating to the working vehicle 1 and the working device 2, and various information detected by the detector 64. The device information relating to the working vehicle 1 and the working device 2 includes size information (working width) relating to the working vehicle 1 and the working device 2 and information relating to the working category and the like of the working device 2. The information detected by the detector 64 includes information relating to the operating status of the working vehicle 1 detected by sensor(s) which is/are the detector 64, an image of the surrounding area of the working vehicle 1 and the working device 2 captured by one or more cameras (imagers) which are the detector 64, and detected obstacle information detected by the object detector(s) 64a (LiDAR, supersonic sensor and/or the like) which is/are the detector 64.

The following discusses the remote communication terminal 50. For example, the remote communication terminal 50 is operable to communicate with the working vehicle 1 via the Internet to operate the working vehicle 1 under monitoring. The remote communication terminal 50 is a stationary computer such as a server or a personal computer.

It is noted that the remote communication terminal 50 may be a portable terminal or the like such as a smartphone, a tablet, or PDA. In this case, the remote communication terminal 50 may be carried by a remote user (human remote monitor, human remote controller or the like) to be moved to the outside of the working vehicle 1 or to be provided at predetermined position inside the cabin 9 of the working vehicle 1. That is, the remote communication terminal 50 can be operated outside the working vehicle 1 and inside the working vehicle 1. It is noted that the outside of the working vehicle 1 is not limited to the outside of the cabin 9, and refers to a position, an apparatus or a device other than the working vehicle 1. The position, the apparatus or the device other than the working vehicle 1 may be near or far from the working vehicle 1.

The remote communication terminal 50 includes a controller 51, a display operation interface 52, a storing device (memory and/or storage) 53, a communicator 54 and a display 55. The controller 51 includes electric or electronic circuit(s), processor(s), one or more memories and/or the like. Examples of the processor(s) include CPU, GPU, DSP, FPGA, ASIC and the like. The memories of the controller 51 include a volatile memory and a nonvolatile memory. The controller 51 is configured or programmed to control elements of the remote communication terminal 50. The controller 51 includes an area definer 51b and a route generator 51c. For example, the aforementioned processor(s) of the controller 51 is/are configured or programmed to execute control program(s) (area defining program, route generating program) stored in the storing device 53 to function as the area definer 51b and the route generator 51c. The area definer 51b and the route generator 51c each include a software program in the present example, but may include hardware such as an electric circuit.

The display 55 is, for example, a liquid crystal display, an organic EL display or the like, and is operable to display various information on a screen.

The display operation interface 52 includes a touch panel provided on the front side of a display screen of the display 55. Various input operation can be performed by performing predetermined actions on the display screen of the display 55. The display operation interface 52 functions as a display, a manual operator and an input interface. A notification of information indicating a predetermined warning is displayed by the display 55 to be provided to a human remote controller and/or the like. Additionally or alternatively, sound, voice, or light indicating a predetermined warning may be output from the alerting device 63.

The storing device 53 includes a nonvolatile memory and/or the like. The storing device 53 is a read/write storing device to store information and/or data to assist in traveling of the working vehicle 1 and agricultural work performed by the working device 2.

The communicator 54 includes an electric circuit or a semiconductor device to communicate with the communicator 66 or the controller 60. The communicator 54 is configured to transmit, for example, control data relating to the automatic operation of the working vehicle 1, more specifically, control data relating to the automatic travel/work of the working vehicle 1 and the working device 2, to the working vehicle 1. The communicator 54 is, for example, a communication interface, a communication module or the like to wirelessly communicate with the communicator 66 of the working vehicle 1 via a communication network such as the Internet, a cellular phone network, and/or some other data communication network. Specifically, when the remote communication terminal 50 is located outside the working vehicle 1, the communicator 54 and the communicator 66 wirelessly communicate with each other via the Internet, instead of short-range radio communication such as Bluetooth (registered trademark). When the remote communication terminal 50 is provided inside the cabin 9 of the working vehicle 1 (inside the vehicle) and connected electrically to the in-vehicle network N1 by a cable or the like, the communicator 54 and the controller 60 may communicate by wire with each other.

After startup of the remote communication terminal 50, a remote user performs predetermined action(s) on the screen displayed by the display operation interface 52. With this, information about an agricultural field H, the working vehicle 1 and/or the working device 2, information about working conditions under which agricultural work is to be performed by the working vehicle 1 and the working device 2 in the agricultural field H, information for use in automatically operating the working vehicle 1, and/or the like are input into the remote communication terminal 50. After that, when the remote user performs predetermined action(s) on the display operation interface 52 to confirm the input content, the area definer 51b defines predetermined area(s) on a map which indicates the agricultural field H. Furthermore, the route generator 51c generates a travel route to be traveled by the working vehicle 1 on the map.

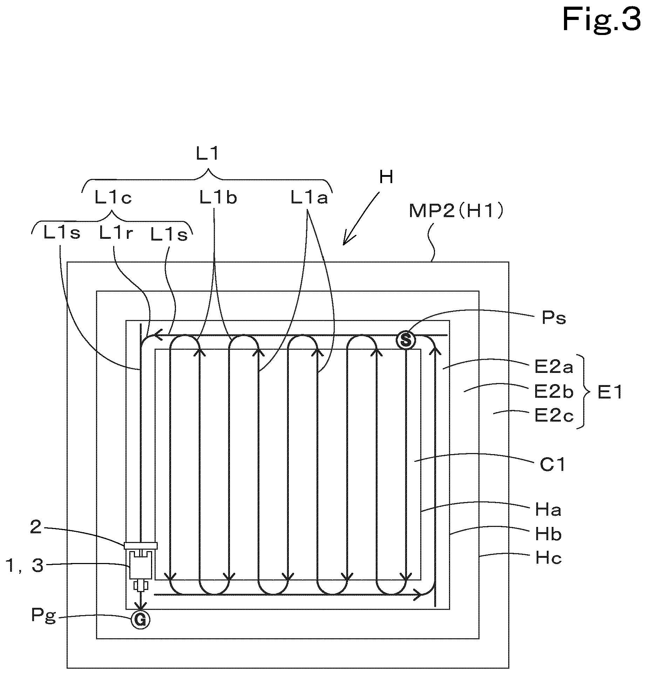

FIG. 3 illustrates an example of a travel route L1 generated by the route generator 51c. The area definer 51b (FIG. 1) defines a central area C1 and a headland area E1 on an agricultural field map MP2 as shown in FIG. 3 based on, for example, position information relating to the agricultural field H (for example, information of latitude and longitude), size information relating to the working device 2, working conditions and/or the like. More specifically, for example, the area definer 51b calculates outlines Hc, Hb and Ha by displacing the outline H1 of the agricultural field H inward by a distance (which is obtained by subtracting overlap-on-headland from the working width of the working device 2) one or more times corresponding to the number of headlands (for example, in FIG. 3, the number of headlands is "3"). The area definer 51b defines the area (central portion) enclosed by the innermost outline Ha as the central area C1. The area definer 51b also defines the frame-shaped area (outer frame portion) provided outward of the central area C1 and inward of the outline H1 of the agricultural field H as the headland area E1. The area definer 51b also defines, as headlands E2a, E2b, and E2c, areas each between adjacent ones of the outline H1 of the agricultural field H and the outlines Hc, Hb and Ha obtained by displacing the outline H1, in the headland area E1. Specifically, the area between the outline H1 and the outline Hc is the headland E2c, the area between the outline Hb and the outline Hc is the headland E2b, and the area between the outline Ha and the outline Hb is the headland E2a. When the number of headlands is "1", for example, the headland area E1 is only the headland E2c, and the area (central portion) enclosed by the outline Hc is defined as the central area C1.

The route generator 51c (FIG. 1) generates the travel route L1 on the agricultural field map MP2 based on the position information of the agricultural field H, the central area C1, the headland area E1, the size information of the working vehicle 1 and the working device 2, the working conditions, the automatic operation information and/or the like. Specifically, the route generator 51c generates a plurality of unit work sections in the central area C1 from one of opposite edges (the right edge in FIG. 3) of the central area C1 each extending parallel to the working direction (up-down direction in FIG. 3) such that the unit work sections each have a width obtained by subtracting overlap-in-central-portion (which is included in the working conditions) from the working width of the working device 2. The route generator 51c then generates a straight route portion L1a along which the traveling vehicle body 3 travels straight, on the widthwise (sideways direction in FIG. 3) centerline of each unit work section. Next, the route generator 51c generates turn route portions L1b each connecting adjacent ones of the straight route portions L1a in the headland area E1. Each of the turn route portions L1b extends from one of the two adjacent straight route portions L1a to the other. The route generator 51c, when generating the turn route portions L1b, defines, in the headland area E1, a turn space for the working vehicle 1 and the working device 2 to turn.

The turn route portions L1b each in the form of a simple semicircle are shown as an example in FIG. 3 for convenience of description, such as for ease of displaying the turn route portions L1b on the display screen of the display operation interface 52 and for easy visual recognition of the travel route L1 on the display screen. When the traveling vehicle body 3 of the agricultural machine 1 and the working device 2 actually travel along one of adjacent straight route portions L1a and then turn toward the other of the adjacent straight route portions L1a, the traveling vehicle body 3 and the like may make a multi-point turn or travel rearward in addition to traveling forward, forming a path of a more complex shape than the simple semicircle. That is, the turn route portions L1b are for display on the display operation interface 52, and there may be cases in which the agricultural machine 1 does not turn along the turn route portions L1b.

The controller 60 of the working vehicle 1 (FIG. 1), while causing the traveling vehicle body 3 to travel based on a straight route portion L1a, causes the linkage 8 (FIG. 2) to lower the working device 2 to a work position P1 to cause the working device 2 to perform ground work. The controller 60, when causing the traveling vehicle body 3 to turn in an area corresponding to a turn route portion L1b, i.e., when causing the traveling vehicle body 3 to turn from one of adjacent straight route portions L1a toward the other, causes the linkage 8 to raise the working device 2 to a non-working position P2 to stop the working device 2 from performing the ground work. That is, the straight route portions L1a are work route portions on which ground work is performed by the working device 2 while the traveling vehicle body 3 of the working vehicle 1 is caused to travel in automatic operation. The central area C1 in which the straight route portions L1a are generated is a work area in which ground work is performed by the working device 2 while the traveling vehicle body 3 is caused to travel straight back and forth in automatic operation.

For example, in the case where a working condition indicating that work is to be performed in the central area C1 and the innermost headland E2a is input, the route generator 51c generates a circuit route portion L1c which extends around the central area C1 in addition to the straight route portions L1a and the turn route portion portions L1b, in the headland area E1. The circuit route portion L1c is a working route portion on which ground work is performed by the working device 2 while the traveling vehicle body 3 of the working vehicle 1 is caused to travel in automatic operation. The circuit route portion L1c includes a plurality of straight route portions L1s which are substantially straight and a plurality of turn route portions L1r in the form of a curve with a curvature equal to or greater than a predetermined value. Each of the plurality of straight route portions L1s is generated on the widthwise centerline of the headland E2a such that the straight route portions L1s correspond to respective straight portions of the outline Ha of the central area C1.

Each of the turn route portions L1r is a route portion extending from one of adjacent straight route portions L1s toward the other that is next to the one of the adjacent straight route portions L1s in the direction of extension thereof. Although adjacent straight route portions L1s extend in different directions, the end point of one of the straight route portions L1s and the starting point of the other of the straight route portions L1s are connected by a turn route portion L1r. Also when generating each turn route portion L1r, the route generator 51c defines a turn space for the traveling vehicle body 3 of the working vehicle 1 and the working device 2 to turn, in the headland area E1.

FIG. 3 illustrates the turn route portions L1b each in the form of a simple arc for convenience of description, for example. However, when the working vehicle 1 and the like actually turn from one of adjacent straight route portions L1s toward the other, the working vehicle 1 and the like may make a multi-point turn or travel rearward in addition to traveling forward, forming a path of more complex shape than the arc. That is, the turn route portions L1r are for display on the display operation interface 52, and there may be cases in which the working vehicle 1 does not turn along the turn route portions L1r.

The route generator 51c, after generating the circuit route portion L1c, sets a start point Ps at the end not connected to any turn route portion L1b (the upper end of the rightmost straight route portion L1a in FIG. 3) of one of endmost straight route portions L1a (the leftmost and rightmost straight route portions L1a in FIG. 3) in the central area C1, and connects the circuit route portion L1c to an end of the other of the endmost straight route portions L1a (to the lower end of the leftmost straight route portion L1a in FIG. 3). The route generator 51c sets a goal point Pg at the end of the circuit route portion L1c that is not connected to any straight route portion L1a. The route generator 51c then causes the internal memory to store, as route information, information indicating the central area C1, the headland area E1, the travel route L1, the start point Ps, the goal point Pg and the turn spaces.

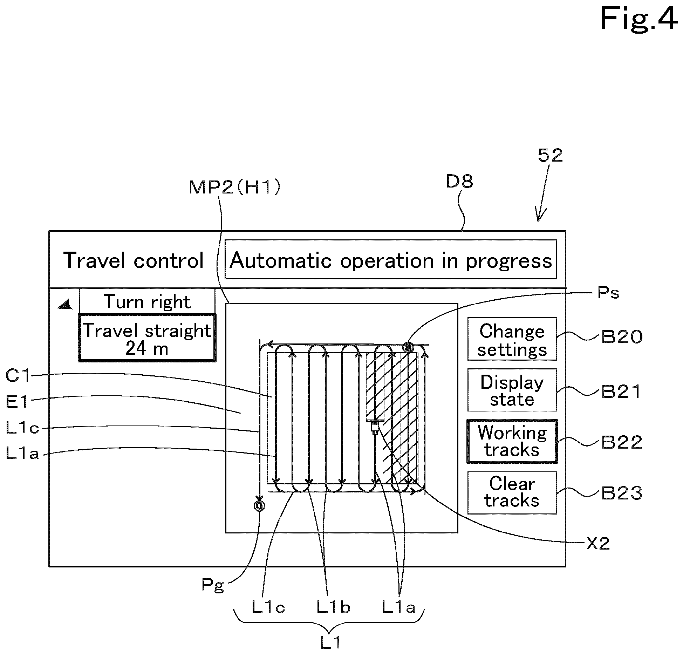

The controller 51, after generating the travel route L1 via the route generator 51c, causes the display operation interface 52 to display the route information such as the agricultural field map MP2, the central area C1, the headland area E1, the travel route L1, the start point Ps and the goal point Pg. After that, when the remote user performs a predetermined action on the display operation interface 52, the controller 51 causes the display operation interface 52 to display a travel control screen D8 shown in FIG. 4. The controller 51 generates automatic travel data based on settings information stored in the internal memory, and transmits (outputs) the automatic travel data to the controller 60 of the working vehicle 1 via the communicator 54.

The automatic travel data includes the route information, settings information relating to the working vehicle 1, settings information relating to the working device 2, the automatic operation information, and/or the like. Of these, the information relating to the travel route L1 included in the route information may include information indicating the positions of the work route portions L1a and L1s, and may not include information indicating the positions of the turn route portions L1b and L1r. The settings information relating to the working vehicle 1 and the working device 2 includes the size information relating to the working vehicle 1 and the working device 2 and categories of the agricultural work to be performed.

The travel control screen D8 shown in FIG. 4 displays the manner in which the working vehicle 1 travels and the manner in which the working device 2 performs work in the automatic traveling/work mode. The travel control screen D8 in FIG. 4 displays the manner in which the working vehicle 1 travels and the manner in which work is performed, after a certain period from the start of the automatic traveling/work mode. The travel control screen D8 displays the agricultural field map MP2, the travel route L1, the start point Ps, the goal point Pg, an agricultural machine symbol X2, the manner in which the working vehicle 1 travels, a "change settings" key B20, a "display state" key B21, a "work tracks" key B22, and a "clear tracks" key B23. The controller 51 acquires the actual position of the traveling vehicle body 3 detected by the position detector 40 at predetermined intervals via the communicator 54, and causes the agricultural machine symbol X2 to be always displayed at the point on the agricultural field map MP2 that corresponds to the actual position of the traveling vehicle body 3. That is, the agricultural machine symbol X2 on the travel control screen D8 indicates the actual position of the traveling vehicle body 3 of the working vehicle 1.

For example, the remote user manually operates the working vehicle 1 to move to the start point Ps while looking at the travel control screen D8, and then performs a predetermined operation using the mode switch 62a (FIG. 1) to enter the automatic traveling/work mode. With this, the controller 60 enters the automatic traveling/work mode, and starts the automatic operation of the working vehicle 1 and causes the working device 2 to perform ground work while causing the traveling vehicle body 3 to travel in automatic operation based on the automatic travel data received from the remote communication terminal 50 and the position of the traveling vehicle body 3 detected by the position detector 40.

Specifically, the controller 60 first reads the route information included in the automatic travel data to acquire the central area C1, the headland area E1, the travel route L1 (work route portions L1a, L1s), the start point Ps and the goal point Pg. Next, the controller 60 causes the working device 2 to perform ground work while causing the traveling vehicle body 3 to travel in automatic operation based on the straight route portions L1a of the travel route L1 from the start point Ps. When the traveling vehicle body 3 (working vehicle 1) reaches the ending point of one of adjacent straight route portions L1a, the controller 60 temporarily stops the ground work performed by the working device 2, causes the working device 2 to be raised, and causes the traveling vehicle body 3 turn toward the starting point of the other of the adjacent straight route portions L1a. In other words, the controller 60 causes the working vehicle 1 and the working device 2 to turn in an area corresponding to a turn route portion L1b. In so doing, the controller 60 causes the working vehicle 1 and the working device 2 to turn based on the position information of the headland area E1 and the central area C1, the position information of the straight route portions L1a, the size information of the working vehicle 1 and the working device 2, the position of the traveling vehicle body 3 detected by the position detector 40, the detection result from the detector 64, and/or the like.

When the traveling vehicle body 3 reaches the starting point of the other of the adjacent straight route portions L1a, the controller 60 causes the working device 2 to be lowered, and restarts the ground work by the working device 2 when starting causing the traveling vehicle body 3 to travel in automatic operation based on the other of the adjacent straight route portions L1a. With this, the traveling vehicle body 3 travels straight back and forth in automatic operation in the central area C1, and ground work is performed on the central area C1 by the working device 2.

After that, the controller 60 causes the working device 2 to perform ground work while causing the traveling vehicle body 3 to travel in automatic operation based on the circuit route portion L1c and the position of the traveling vehicle body 3. In so doing, the controller 60 causes the working device 2 to perform ground work while causing the traveling vehicle body 3 to travel in automatic operation based on the straight route portions L1s, and, when causing the traveling vehicle body 3 to turn in an area corresponding to a turn route portion L1r, causes the working device 2 to be raised to stop the ground work. The turn is performed in the following manner: the controller 60 causes the working vehicle 1 and the working device 2 to turn based on the position information relating to the central area C1 and the headland area E1, the position information relating to the straight route portions L1s, the size information relating to the working vehicle 1 and the working device 2, the position of the traveling vehicle body 3 detected by the position detector 40, the detection result from the detector 64 and/or the like. With this, the traveling vehicle body 3 travels around the central area C1 in automatic operation, and the working device 2 performs the ground work on the headland E2a (FIG. 3) surrounding the central area C1.

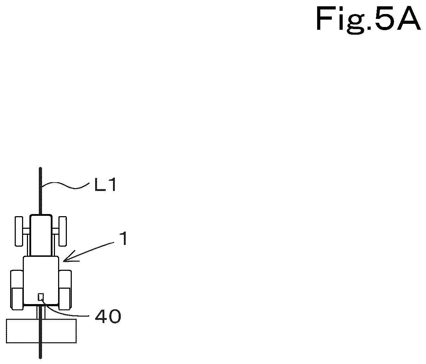

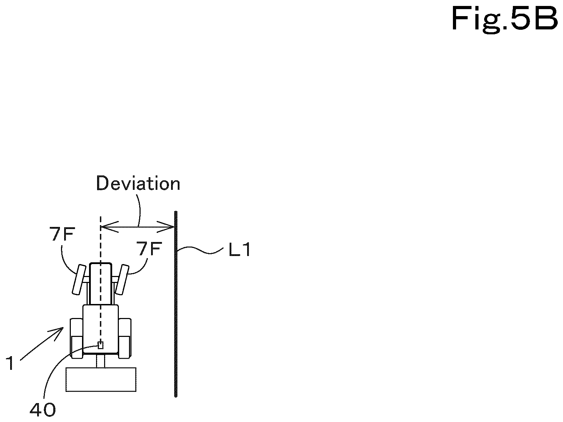

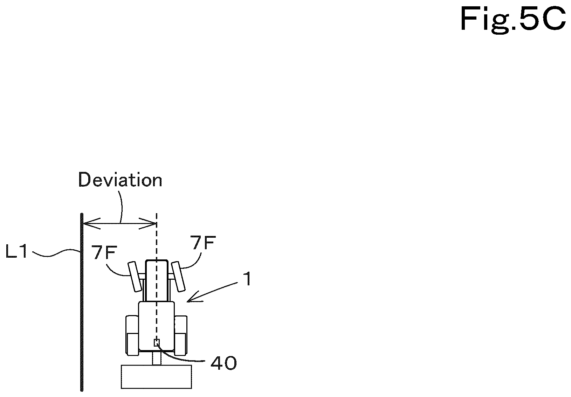

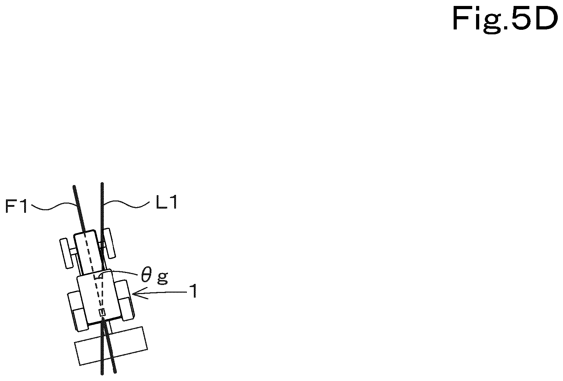

FIGS. 5A to 5D illustrate automatic steering of the working vehicle 1. In the automatic traveling/work mode, the controller 60 calculates the deviation of the position of the traveling vehicle body 3 detected by the position detector 40 from the travel route L1 (work route portion L1a, L1s) while causing the traveling vehicle body 3 to travel in automatic operation. If the deviation is less than a threshold (for example, FIG. 5A), the controller 60 maintains the angle of rotation of the steering shaft 31 (FIG. 1). If the deviation of the position of the traveling vehicle body 3 from the travel route L1 is equal to or more than the threshold and the traveling vehicle body 3 is positioned leftward of the travel route L1 (for example, FIG. 5B), the controller 60 rotates the steering shaft 31 such that the traveling vehicle body 3 is steered right. If the deviation of the position of the traveling vehicle body 3 from the travel route L1 is equal to or more than the threshold and the traveling vehicle body 3 is positioned rightward of the travel route L1 (for example, FIG. 5C), the controller 60 rotates the steering shaft 31 such that the traveling vehicle body 3 is steered left. The above is merely an example of a method of automatically steering the working vehicle 1, and the method of automatically steering the working vehicle 1 is not limited to the above-mentioned method.

The controller 60, while causing the traveling vehicle body 3 to automatically travel based on the travel route L1, calculates the actual vehicle speed of the traveling vehicle body 3 based on changes in position of the traveling vehicle body 3. The controller 60 then controls the driving of the transmission 5, the brake 6 and the prime mover 4 such that the actual vehicle speed matches (or substantially matches) the vehicle speed associated with a corresponding one of the straight route portions L1a, the turn route portions L1b and the circuit route portion L1c.

As has been discussed, when the working vehicle 1 is in the automatic traveling/work mode, the controller 60 automatically steers the traveling vehicle body 3 while automatically changing the travel speed of the traveling vehicle body 3 based on the travel route L1 and the position of the traveling vehicle body 3 (working vehicle 1). The controller 60 also automatically causes the working device 2 to perform and stop agricultural work (ground work).

The working vehicle 1 is operable to perform the remote operation (to be remotely operated) based on the operation of the short-range communication terminal 90 by a nearby user (a human remote controller positioned outside the working vehicle 1 at a short distance from the working vehicle 1). Specifically, when the working vehicle 1 is in the remote operation mode, the controller 60, based on a control signal from the short-range communication terminal 90, controls the transmission 5 and the brake 6 to remotely cause the traveling vehicle body 3 to travel or stop, and causes the steering cylinder 35 to extend or retract by controlling the control valve 34 to cause the knuckle arms 39 to change the steering direction of the front wheels 7F. That is, the working vehicle 1 is configured to operate in the remote operation in which a remote traveling control and a remote steering control are performed based on a control signal from the short-range communication terminal 90 corresponding to the nearby user's operation.

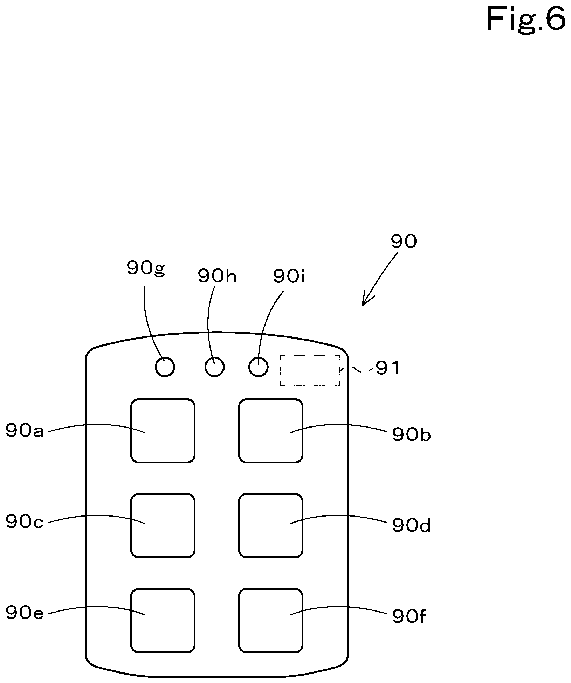

As shown in FIG. 6, the short-range communication terminal 90 is a small manual operator communicable with the communicator 66 of the working vehicle 1 via a short-range communication, and configured to be held by the nearby user. For example, the short-range communication terminal 90 is a remote controller (remote control), and includes a communicator 91. The communicator 91 is configured or programmed to communicate with the communicator 66 of the working vehicle 1 via a short-range communication such as Bluetooth (registered trademark). That is, the short-range communication terminal 90 is used to perform automatic operation or remote operation monitored at a short distance (monitored visually) without using the Internet, and the sort-range communication terminal 90 is used to perform the automatic operation visually monitored at a short distance when the automatic operation monitored from the remote place cannot be performed.

The short-range communication terminal 90 includes, for example, six buttons (first to sixth buttons 90a to 90f) and three indicators (first to third indicators 90g to 90i). The number of buttons and indicators may be another number.

The sixth button 90f is a function button. When the sixth button 90f is pressed and held, the short-range communication terminal is powered ON. When the sixth button 90f is pressed twice, the short-range communication terminal 90 outputs a start signal to start the remote operation, and the working vehicle 1 enters the remote operation mode. When the sixth button 90f is pressed twice when the short-range communication terminal 90 is ON, the short-range communication terminal 90 outputs an end signal to end the remote operation, and if the working vehicle 1 is in the remote operation mode, the remote operation mode ends. When the sixth button 90f is pressed and held when the short-range communication terminal 90 is ON, the short-range communication terminal is powered OFF.

The first button 90a is operable to, when the first button 90a and the sixth button 90f are pressed simultaneously, cause the working vehicle 1 to travel forward. When the first button 90a and the sixth button 90f are pressed simultaneously, the short-range communication terminal 90 transmits a forward-travel signal to the working vehicle 1, and the working vehicle 1 in the remote operation mode is remotely operated to travel forward .

The second button 90b is operable to, when the second button 90b and the sixth button 90f are pressed simultaneously, to cause the working vehicle 1 to travel rearward. When the second button 90b and the sixth button 90f are pressed simultaneously, the short-range communication terminal 90 transmits a rearward-travel signal to the working vehicle 1, and the working vehicle 1 in the remote operation mode is remotely operated to travel rearward.

The third button 90c is operable to, when the third button 90c and the sixth button 90f are pressed simultaneously, cause the working vehicle 1 to turn left. When the third button 90c and the sixth button 90f are pressed simultaneously, the short-range communication terminal 90 transmits a left turn signal to the working vehicle 1, and the working vehicle 1 in the remote operation mode is remotely operated to turn left. When the third button 90c stops being pressed, the short-range communication terminal 90 transmits a left turn end signal to the working vehicle 1, and the working vehicle in the remote operation mode stops turning left.

The fourth button 90d is operable to, when the fourth button 90d and the sixth button 90f are pressed simultaneously, cause the working vehicle 1 to turn right. When the fourth button 90d and the sixth button 90f are pressed simultaneously, the short-range communication terminal 90 transmits a right turn signal to the working vehicle 1, and the working vehicle 1 in the remote operation mode is remotely operated to turn right. When the fourth button 90d stops being pressed, the short-range communication terminal 90 transmits a right turn end signal to the working vehicle 1, and the working vehicle in the remote operation mode stops turning right.

The fifth button 90e is operable to, when the fifth button 90e and the sixth button 90f are pressed simultaneously, stop the working vehicle 1. When the fifth button 90e and the sixth button 90f are pressed simultaneously, the short-range communication terminal 90 transmits a stop signal to the working vehicle 1, and the working vehicle 1 in the remote operation mode stops traveling. For example, the working vehicle 1 in the remote operation mode stops traveling forward or rearward.

When the first button 90a and the third button 90c are simultaneously pressed together with the sixth button 90f, the short-range communication terminal 90 transmits a work start signal to the working vehicle 1, and the working vehicle 1 in the remote operation mode is remotely operated to start the operation of the working device 2. On the other hand, when the second button 90b and the fourth button 90c are simultaneously pressed together with the sixth button 90f, the short-range communication terminal 90 transmits a work end signal to the working vehicle 1, and the working vehicle 1 in the remote operation mode is remotely operated to end the operation of the working device 2.

The first indicator 90g indicates the battery level when the short-range communication terminal 90 is ON, and the color of the indication changes from green to red when the battery level runs low. The second indicator 90h indicates the status of communication with the working vehicle 1, and the color the indication is green when the status of communication is good and red when the communication is unavailable. The third indicator 90i is configured such that the color of the indication is green when the working vehicle 1 is in the remote operation mode, the indication is off when the working vehicle 1 is not in the remote operation mode, and the color of the indication is red when there is an abnormality in the working vehicle 1.

The above-mentioned manners of operating the first to sixth buttons 90a to 90f are merely examples, and do not imply any limitation. The buttons may be configured to be operated in other manners. The number of buttons may also be other than six. The types of indications provided by the first to third indicator 90g to 90i are merely examples, and do not imply any limitation. The types of indications may be other types of indications. The number of the indicators may also be other than three.

The monitoring system 100 includes an anti-theft configuration for the working vehicle 1 in the monitored mode. The following description discusses such a configuration.

The controller 60 is configured or programmed to, when the controller 60 receives a permission signal from the remote communication terminal 50 while the working vehicle 1 is in the monitored mode, bring the working vehicle 1 into a permission mode in which the monitored mode is allowed to transition to the manual mode. The permission mode is a type of the monitored mode in which an instruction to cause a transition to the manual mode is acceptable.

The working vehicle 1 includes a switch 62c to be turned on and off. The switch 62c is an operating switch such as a press button switch, a selector switch, or a toggle switch. The switch 62c is provided at a predetermined position inside the cabin 9. The predetermined position is, for example, a position that can be reached by the operator sitting in the operator's seat 10. The controller 60 is configured or programmed to, while the working vehicle 1 is in the permission mode, when the switch 62c is turned on, i.e., when an instruction to cause a transition to the manual mode is issued, bring the working vehicle 1 into the manual mode.

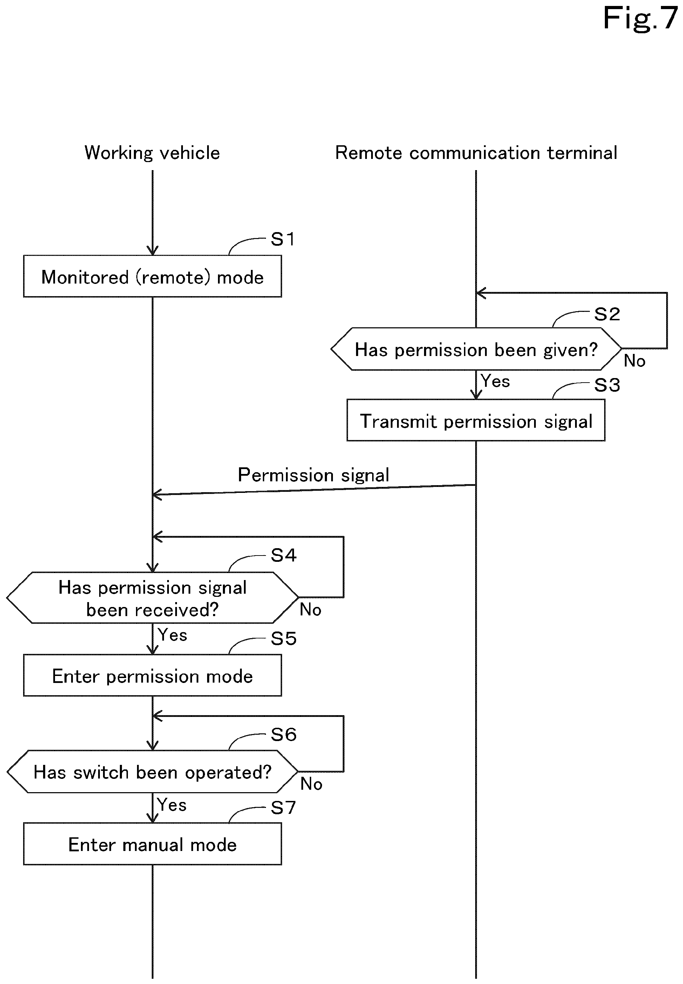

The following discusses an anti-theft process for the working vehicle 1 in the monitored mode performed by the monitoring system 100, with reference to FIG. 7. FIG. 7 is a flowchart showing the anti-theft process for the working vehicle in the monitored mode.

As shown in FIG. 7, assume that the working vehicle 1 is in the monitored mode in which the working vehicle 1 can be operated under monitoring by the remote communication terminal 50 (S1). When the controller 51 of the remote communication terminal 50 receives an instruction for the permission mode from a remote user, the controller 51 determines that the user has given permission (YES at S2). When the controller 51 receives no instructions for the permission mode, the controller 51 determines that the user has not given permission (NO at S2), and repeats step S2 until an instruction for the permission mode is received.

When the controller 51 determines that the user has given permission (YES at S2), the controller 51 transmits a permission signal to the working vehicle 1 via the communicator 54 (S3).

The controller 60 of the working vehicle 1 determines whether the permission signal is received by the communicator 66 (S4). When the communicator 66 receives the permission signal (YES at S4), the controller 60 brings the working vehicle 1 into the permission mode (S5). On the other hand, when the communicator 66 does not receive the permission signal (NO at S4), repeats step S4 until the permission signal is received.

After S5, the controller 60 of the working vehicle 1 determines whether the switch 62c is operated (S6). If the switch 62c is turned on while the working vehicle 1 is in the permission mode (YES at S6), i.e., if there is an instruction to cause a transition to the manual mode, the controller 60 brings the working vehicle 1 into the manual mode (S7).

On the other hand, if the switch 62c is not turned on (NO at S6), for example, if the switch 62c remains off, the controller 60 repeats step S6 until the switch 62c is turned on.

As described earlier, when the working vehicle 1 is in the manual mode, a person in the working vehicle 1 is allowed to manually operate the working vehicle 1. On the other hand, when the working vehicle 1 is in the monitored mode and the permission mode, the person in the working vehicle 1 is not allowed to manually operate the working vehicle 1. Thus, with the monitoring system 100 of an example embodiment, it is possible to eliminate or reduce the likelihood that the mode of the working vehicle 1 will be changed from the monitored mode to the manual mode in an unauthorized manner, and possible to eliminate or reduce the likelihood that the working vehicle 1 in the monitored mode will be stolen.

As shown in FIG. 1, the working vehicle 1 may include a sensor 64b to detect the entrance of a person into the working vehicle 1. The sensor 64b is operable to detect a person in the cabin 9. The sensor 64b here is a motion sensor, but may be a seat occupancy sensor to detect whether the operator's seat 10 is occupied or the like.

When the sensor 64b detects the entrance of a person, the communicator 66 transmits an entrance detection signal to the remote communication terminal 50.

The remote communication terminal 50 may include a determiner 51d to determine whether or not to cause a transition to the permission mode when the entrance detection signal is received while the working vehicle 1 is in the remote mode. For example, the determiner 51d determines to cause a transition to the permission mode when an instruction to cause a transition to the permission mode is input by a human remote controller (a user of the remote communication terminal 50), and determines to not cause a transition to the permission mode when an instruction to not cause a transition to the permission mode is input by the human remote controller (the user of the remote communication terminal 50). The determiner 51d may be configured or programmed to, based on a work plan stored in advance in the storing device 53, determine to cause a transition to the permission mode when receiving the entrance detection signal during the time-of-day of the manual operation in the work plan, and determine to not cause a transition to the permission mode when receiving the entrance detection signal not during the time-of-day of the manual operation in the work plan.

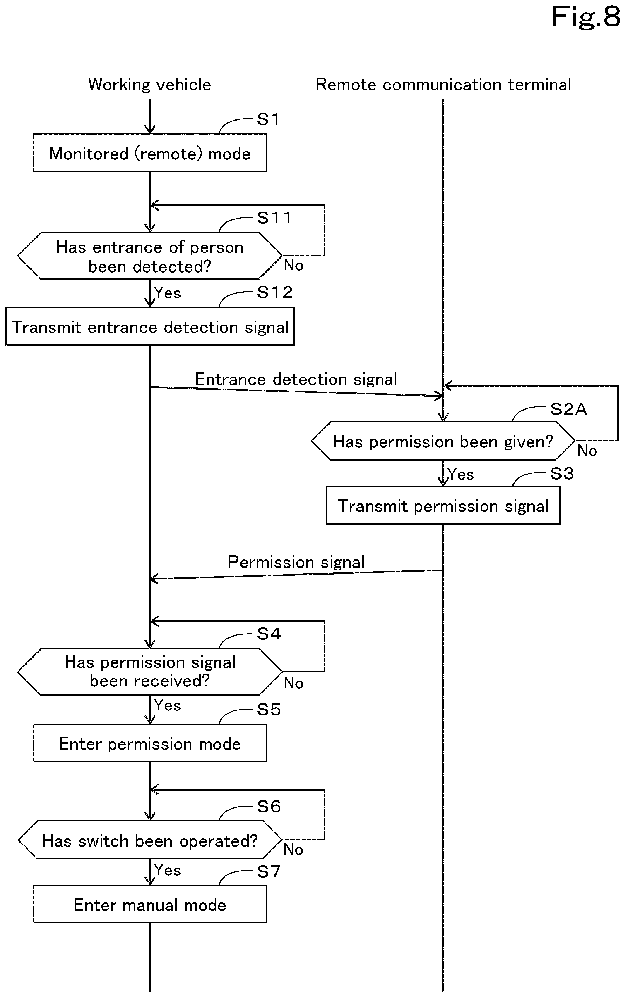

The following description discusses an anti-theft process for the working vehicle 1 in the monitored mode performed by the monitoring system 100, with reference to FIG. 8. FIG. 8 is a flowchart showing another example of the anti-theft process different from FIG. 7. The anti-theft process shown in FIG. 8 differs from the anti-theft process shown in FIG. 7 in that the anti-theft process shown in FIG. 8 includes additional steps S11 and S12 and includes step S2A instead of step S2. Thus, steps S11, S12 and S2A shown in FIG. 8 will be described in detail.

As shown in FIG. 8, assume that the working vehicle 1 is in the monitored mode in which the working vehicle 1 can be operated under monitoring by the remote communication terminal 50 (S1). The controller 60 of the working vehicle 1 determines whether or not a person is in the working vehicle 1 (S11). Specifically, the controller 60, when the sensor 64b detects the entrance of a person ( YES at S11), transmits an entrance detection signal to the remote communication terminal 50 via the communicator 66 (S12).

On the other hand, when the sensor 64b does not detect the entrance of a person (NO at S11), the controller 60 repeats step S11 until the entrance is detected by the sensor 64b.

The determiner 51d of the remote communication terminal 50 determines whether or not to cause a transition to the permission mode when the entrance detection signal is received while the working vehicle 1 is in the remote mode (S2A). For example, the determiner 51d determines to cause a transition to the permission mode when an instruction to cause a transition to the permission mode is input by the human remote controller (user of the remote communication terminal 50) (YES at S2A). On the other hand, the determiner 51d determines to not cause a transition to the permission mode when an instruction to not cause a transition to the permission mode is input by the human remote controller (user of the remote communication terminal 50) (NO at S2A).

The determiner 51d may be configured or programmed to, based on the work plan stored in advance in the storing device 53, determine to cause a transition to the permission mode when receiving the entrance detection signal during the time-of-day of the manual operation in the work plan (YES at S2A), and determine to not cause a transition to the permission mode when receiving the entrance detection signal not during the time-of-day of the manual operation in the work plan (NO at S2A).

Note that steps S3 to S7 shown in FIG. 8 are the same as those shown in FIG. 7, and therefore the description therefor is omitted.

With the above-described configuration, whether or not to cause a transition to the permission mode is determined when a person has entered the working vehicle 1 in the remote mode, and the manual mode is not entered when it is determined that a transition to the permission mode is not caused, making it possible to eliminate or reduce the likelihood that the working vehicle 1 in the remote mode will be stolen.

As shown in FIG. 1, the working vehicle 1 may include an imager 64c (see FIG. 1) to, when the entrance a person is detected by the sensor 64b, capture an image of the person. The imager 64c is, for example, an in-cabin camera provided inside the cabin 9 to capture an area including the operator's seat 10. The imager 64c may be operable to capture any image such as a still picture or video. When the entrance is detected by the sensor 64b, the communicator 66 transmits an entrance detection signal and the captured image of the person captured by the imager 64c to the remote communication terminal 50.

The determiner 51d determines whether or not to cause a transition to the permission mode based on the entrance detection signal and the captured image. For example, the human remote controller (user of the remote communication terminal 50) determines that the person in the captured image is an authorized user by checking the captured image captured by the imager 64c (in-cabin camera). The determiner 51d determines to cause a transition to the permission mode when an instruction to cause a transition to the permission mode is input. On the other hand, the human remote controller (user of the remote communication terminal 50) determines that the person in the captured image is not an authorized user by checking the captured image captured by the imager 64c (in-cabin camera). The determiner 51d determines to not cause a transition to the permission mode when an instruction to not cause a transition to the permission mode is input. The determiner 51d may be configured or programmed to perform image processing for face recognition on the captured image captured by the imager 64c (in-cabin camera), determine to cause a transition to the permission mode when the person in the captured image matches an authorized user, and determine to not cause a transition to the permission mode when the person in the captured image does not match an authorized user.

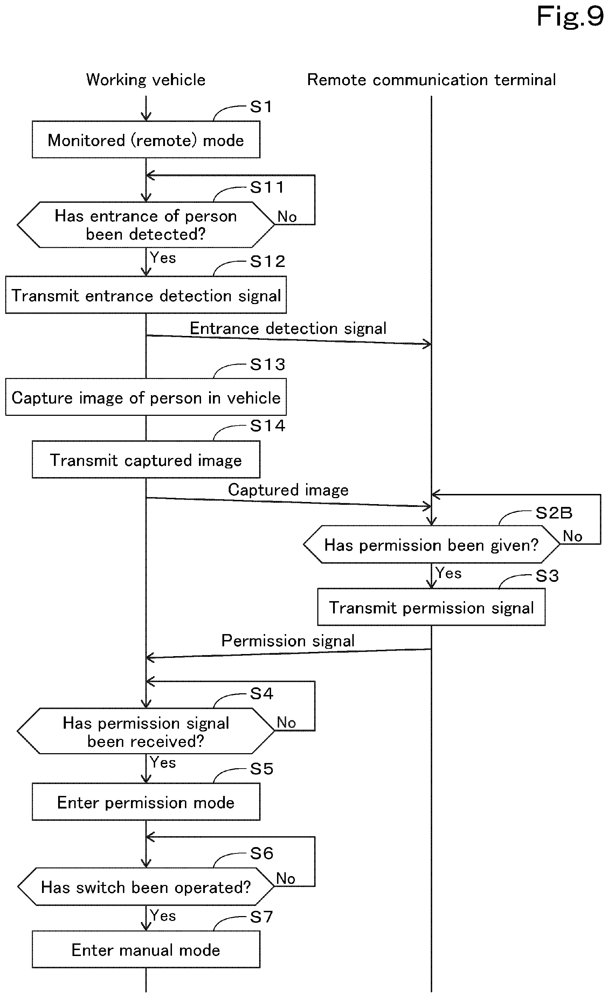

The following description discusses the anti-theft process for the working vehicle 1 in the monitored mode performed by the monitoring system 100, with reference to FIG. 9. FIG. 9 is a flowchart showing another example of the anti-theft process different from FIG. 8. The anti-theft process shown in FIG. 9 differs from the anti-theft process shown in FIG. 8 in that the anti-theft process shown in FIG. 9 includes additional steps S13 and S14 and includes step S2B instead of step S2A. Thus, steps S13, S14, and S2B shown in FIG. 9 will be described in detail.

As shown in FIG. 9, assume that the entrance detection signal is transmitted from the working vehicle 1 to the remote communication terminal 50 in S12.

After S12, the imager 64c captures an image of the person entered the cabin 9, for example, the person sitting in the operator's seat 10 (S13). After S13, the controller 60 of the working vehicle 1 transmits the captured image captured by the imager 64c to the remote communication terminal 50 via the communicator 66 (S14). The communicator 66 may be configured or programmed to transmit a plurality of the captured images (still images) captured by the imager 64c one by one, transmit one captured image (still image), or continuously transmit the captured image (video) captured by the imager 64c.

The determiner 51d of the remote communication terminal 50 determines whether or not to cause a transition to the permission mode when the entrance detection signal and the captured image are received while the working vehicle 1 is in the remote mode (S2B). For example, the determiner 51d determines to cause a transition to the permission mode when the human remote controller (user of the remote communication terminal 50) checks the captured image captured by the imager 64c (in-cabin camera), determines that the person in the captured image is an authorized user, and inputs an instruction to cause a transition to the permission mode (YES at S2B). On the other hand, the determiner 51d determines not to cause a transition to the permission mode when the human remote controller (user of the remote communication terminal 50) checks the captured image captured by the imager 64c (in-cabin camera), determines that the person in the captured image is not an authorized user, and inputs an instruction to not cause a transition to the permission mode (NO at S2B).

Additionally or alternatively, the determiner 51d performs image processing for face recognition on the captured image captured by the imager 64c (in-cabin camera) and, when the person in the captured image matches an authorized user, determine to cause a transition to the permission mode (YES at S2B). On the other hand, the determiner 51d may be configured or programmed to determine to not cause a transition to the permission mode when the person in the captured image does not match an authorized user (NO at S2B).

Note that steps S3 to S7 shown in FIG. 9 are the same as those shown in FIG. 7, and therefore the description therefor is omitted.

With the above-described configuration, when a person enters the working vehicle 1 in the remote mode, whether or not to cause a transition to the permission mode is determined based on the captured image of the person captured by the imager 64c, and the manual mode is not entered if it is determined that a transition to the permission mode is not to be caused. Thus, it is possible to eliminate or reduce the likelihood that the working vehicle 1 in the remote mode will be stolen.

As shown in FIG. 1, the remote communication terminal 50 may include a user authenticator 51a. The user authenticator 51a determines whether the person entered in the working vehicle 1 is an authorized user. For example, the foregoing processor(s) of the controller 51 function(s) as the user authenticator 51a by executing a user authentication program stored in the storing device 53.

The user authenticator 51a determines that the person is an authorized user when a password entered by the person in the working vehicle 1 matches the password of the authorized user stored in the storing device 53, and determines that the person is not an authorized user when the password does not match the password of the authorized user.

The user authenticator 51a may be configured or programmed to perform biometrics authentication such as using face recognition, fingerprint recognition and/or voice recognition. For example, in the case of face recognition, the user authenticator 51a is configured or programmed to determine that the person is an authorized user when the face image of the person in the working vehicle 1 matches the face image of the authorized user stored in the storing device 53, and determine that the person is not an authorized user when the face image does not match the face image of the authorized user.

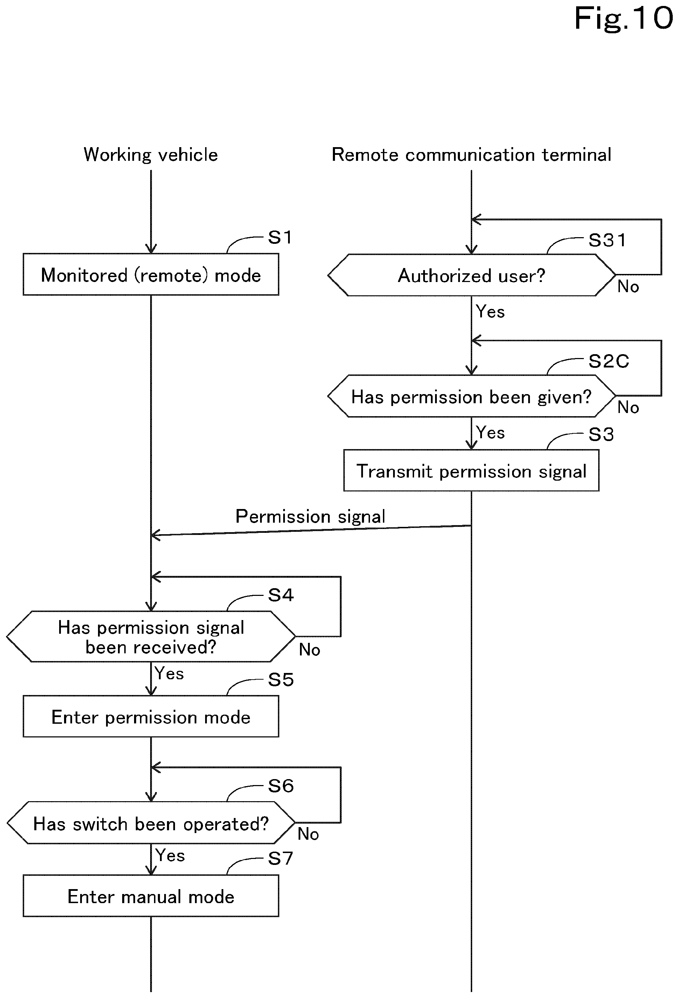

The following description discusses the anti-theft process for the working vehicle 1 in the monitored mode performed by the monitoring system 100, with reference to FIG. 10. FIG. 10 is a flowchart showing another example of the anti-theft process different from FIG. 7. The anti-theft process shown in FIG. 10 differs from the anti-theft process shown in FIG. 7 in that the anti-theft process shown in FIG. 10 includes additional step S31 and includes step S2C instead of S2 . Thus, steps S31 and S2C shown in FIG. 10 will be described in detail.

As shown in FIG. 10, assume that the working vehicle 1 is in the monitored mode in which the working vehicle 1 can be operated under monitoring by the remote communication terminal 50 (S1). The user authenticator 51a of the remote communication terminal 50 determines whether a person in the working vehicle 1 is an authorized user (S31).

For example, the user authenticator 51a determines that the person in the working vehicle 1 is an authorized user when the password entered by the person matches the password of the authorized user stored in the storing device 53 (YES at S31), and determines that the person is not an authorized user when the password does not match the password of the authorized user (NO at S31). The user authenticator 51a may be configured or programmed to determine whether the person is an authorized user using biometrics recognition such as face recognition, fingerprint recognition and/or voice recognition.

On the other hand, when no operation is performed by the person in the working vehicle 1 (for example, password is not entered) or nothing is detected (NO at S31), the user authenticator 51a repeats step S31 until an operation is performed or a detection is made.

The determiner 51d of the remote communication terminal 50 determines whether or not to cause a transition to the permission mode when determining that the person in the working vehicle 1 is an authorized user while the working vehicle 1 is in the remote mode (S2C). For example, the determiner 51d determines to cause a transition to the permission mode when an instruction to cause a transition to the permission mode is input by the human remote controller (user of the remote communication terminal 50) (YES at S2C). On the other hand, the determiner 51d determines to not cause a transition to the permission mode when an instruction to not cause a transition to the permission mode is input by the human remote controller (user of the remote communication terminal 50) (NO at S2C).

Additionally or alternatively, the determiner 51d is configured or programmed to, based on a work plan stored in advance in the storing device 53, determine to cause a transition to the permission mode when the entrance detection signal is received during the time-of-day of manual operation in the work plan (YES at S2C). On the other hand, the determiner 51d may be configured or programmed to determine to not cause a transition to the permission mode when the entrance detection signal is received not during the time-of-day of manual operation in the work plan (NO at S2C).

Note that steps S3 to S7 shown in FIG. 10 are the same as those shown in FIG. 7, and therefore the description therefor is omitted.

With the above-described configuration, the remote communication terminal 50 can be operated when a user is authenticated as an authorized user, thus making it possible to eliminate or reduce the likelihood that the remote communication terminal 50 will be operated by an unauthorized user and that the manual mode is entered by operating the remote communication terminal 50 in an unauthorized manner. This makes it possible to eliminate or reduce the likelihood that the working vehicle 1 will be stolen by operating the remote communication terminal 50 in an unauthorized manner.

As shown in FIG. 1, the working vehicle 1 may include a locking mechanism 67 to lock the door 11, and the controller 60 may be configured or programmed to control the locking mechanism 67 to lock the door 11 based on an instruction to enter the remote mode issued by the remote communication terminal 50.

The locking mechanism 67 is a mechanical or electromagnetic door locking mechanism to maintain the door 11 in its closed state. The locking mechanism 67 is changeable between a lock state and an unlock state in response to the operation by the person in the working vehicle 1. Specifically, by changing the locking mechanism 67 into the lock state or the unlock state , the door 11 is locked or unlocked. Furthermore, the locking mechanism 67 is brought into the lock state based on a locking signal from the remote communication terminal 50 or the controller 60 to lock the door 11, and is brought into the unlock state based on an unlocking signal from the remote communication terminal 50 or the controller 60 to unlock the door 11.

The controller 60 of the working vehicle 1 controls the locking mechanism 67 to lock the door 11 based on an instruction to enter the remote mode issued by the remote communication terminal 50, for example, based on a monitored mode instruction signal.

The controller 60 does not cause the locking mechanism 67 to lock the door 11 even if an instruction to enter the remote mode (for example, monitored mode instruction signal) is issued by the remote communication terminal 50 when the entrance has been detected by the sensor 64b.

The controller 60 causes the locking mechanism 67 to unlock the door 11 based on an unlocking signal from the remote communication terminal 50.

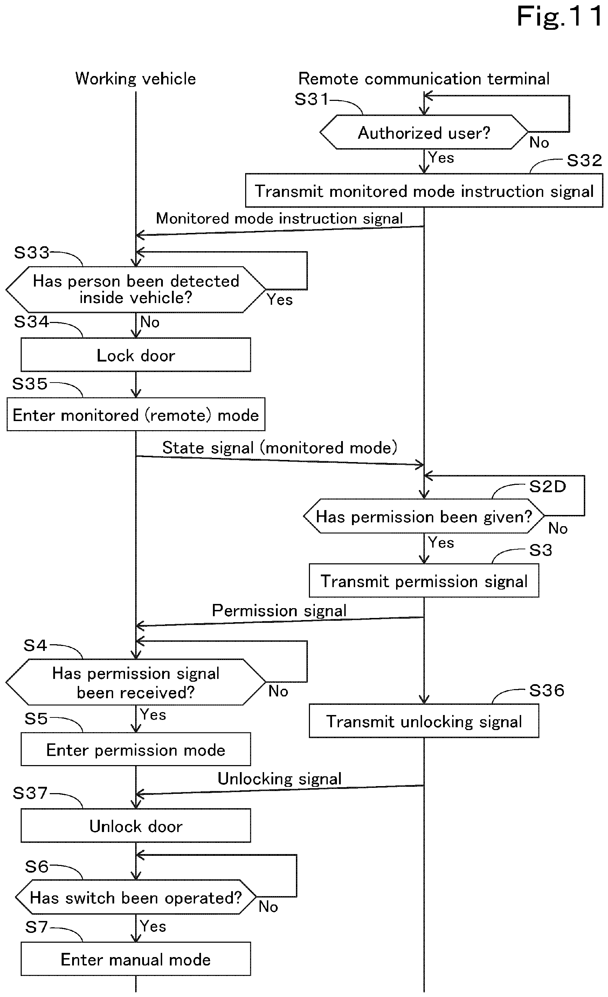

The following description discusses the anti-theft process for the working vehicle 1 in the monitored mode performed by the monitoring system 100, with reference to FIG. 11. FIG. 11 is a flowchart showing another example of the anti-theft process different from FIG. 10. The anti-theft process shown in FIG. 11 differs from the anti-theft process shown in FIG. 10 in that the anti-theft process shown in FIG. 11 includes additional steps S32 to S37 and includes step S2D instead of step S2C. Thus, steps S32 to S37 and S2D shown in FIG. 11 will be described in detail.

As shown in FIG. 11, in S31, if the user authenticator 51a determines that the person who operates the remote communication terminal 50 is an authorized user (YES at S31), the controller 51 of the remote communication terminal 50 transmits a monitored mode instruction signal to the working vehicle 1 via the communicator 66 (S32).

The controller 60 of the working vehicle 1 determines whether or not the entrance of a person is detected by the sensor 64b based on the monitored mode instruction signal from the remote communication terminal 50 (S33).

If the entrance is not detected by the sensor 64b (NO at S33), the controller 60 outputs a locking signal to the locking mechanism 67. The locking mechanism 67, upon receiving the locking signal, enters the lock state to lock the door (S34). That is, the door 11 is locked. Note that the door 11 cannot be locked unless the door is in the close state, and therefore the controller 60 may be configured or programmed to transmit information indicating that the door 11 is the open state to the remote communication terminal 50 via the communicator 66. In a case that the working vehicle 1 includes a mechanism to automatically open and close the door 11, the door 11 may be automatically brought into the close state.

After S34, the controller 60 of the working vehicle 1 causes a transition to the monitored mode (remote mode) (S35), and transmits a state signal (monitored mode) indicating that the working vehicle 1 is in the monitored mode via the communicator 66.

On the other hand, when the entrance is detected by the sensor 64b (YES at S33), i.e., when a person is in the cabin 9, the controller 60 repeats step S33 until the entrance is not detected by the sensor 64b anymore. The controller 60 may be configured or programmed to, when the entrance of a person is detected by the sensor 64b (YES at S33), transmit information indicating that the person is in the cabin 9 to the remote communication terminal 50 via the communicator 66. The remote communication terminal 50, upon receiving an instruction to give a notification prompting a person to exit the vehicle from the remote user (from a person who monitors remote operation or a human remote controller), transmits an instruction signal (a signal to instruct a notification prompting a person to exit the vehicle to be given) to the working vehicle 1 via the communicator 54. The controller 60 of the working vehicle 1 may be configured or programmed to, based on the instruction signal, cause the alerting device 63 to display and/or output via sound the notification prompting a person to exit the working vehicle 1, to prompt the person in the cabin 9 to exit the working vehicle 1.

If the determiner 51d of the remote communication terminal 50 determines that the working vehicle 1 is in the remote mode based on the status signal (monitored mode) from the working vehicle 1 and determines that the person who operates the remote communication terminal50 is an authorized user, the determiner 51d determines whether or not to cause a transition to the permission mode (S2D). For example, the determiner 51d determines to cause a transition to the permission mode when an instruction to enter the permission mode is input by the human remote controller (user of the remote communication terminal 50) (YES at S2D). On the other hand, the determiner 51d determines to not cause a transition to the permission mode when an instruction to not cause a transition to the permission mode is input by the human remote controller (user of the remote communication terminal 50) (NO at S2D).

Additionally or alternatively, the determiner 51d is configured or programmed to, based on a work plan prestored in the storing device 53, determine to cause a transition to the permission mode when an entrance detection signal is received during the time-of-day of manual operation in the work plan (YES at S2D). On the other hand, the determiner 51d may be configured or programmed to determine to not cause a transition to the permission mode when an entrance detection signal is received not during the time-of-day of manual operation in the work plan (NO at S2D).

Note that steps S3 to S7 shown in FIG. 11 are the same as those shown in FIG. 10, and therefore the description therefor is omitted.

After S3, when an unlocking instruction is issued by the human remote controller (user of the remote communication terminal 50), the controller 51 of the remote communication terminal 50 transmits an unlocking signal to the working vehicle 1 via the communicator 54 (S36). The controller 60 of the working vehicle 1 causes the locking mechanism 67 to unlock the door 11 based on the unlocking signal (S37).

With the above-described configuration, when the working vehicle 1 enters the remote mode, the door 11 for entrance and exit is locked, making it possible to eliminate or reduce the likelihood that someone will enter the working vehicle 1 in the remote mode in an unauthorized manner. This makes it possible to eliminate or reduce the likelihood that someone will enter the working vehicle 1 and bring the working vehicle 1 into the manual mode in an unauthorized manner. This makes it possible to more reliably eliminate or reduce the likelihood that the working vehicle 1 in the remote mode will be stolen.

Furthermore, since the door 11 of the working vehicle 1 needs to be unlocked using the remote communication terminal 50, it is possible to eliminate or reduce the likelihood that the working vehicle 1 in the remote mode will be stolen. Since the door is not locked when a person is in the working vehicle 1, it is possible to eliminate or reduce the likelihood that the person will be locked in the working vehicle 1.

The monitoring system 100 shown in FIG. 1 is operable to change the mode of the working vehicle 1 from the remote mode to the manual mode based on an operation signal from the short-range communication terminal 90.

The short-range communication terminal 90 can be used to control the working vehicle 1 when the short-range communication terminal 90 is located within a predetermined range (for example, several meters or several tens of meters) from the working vehicle 1. The communicator 66 of the working vehicle 1 includes a short-range communication module to communicate with the short-range communication terminal 90.

The controller 60 is configured or programmed to, when receiving an operation signal from the short-range communication terminal 90 via the communicator 66, change the remote mode to the manual mode even if the permission signal is not received from the remote communication terminal 50.

The short-range communication terminal 90 includes a user authenticator 92. The user authenticator 92 includes the same configuration as the user authenticator 51a (for example, authentication using password or biometric recognition), and therefore the detailed description therefor is omitted.

The short-range communication terminal 90 is operable to, when a user is authenticated as an authorized user by the user authenticator 92, transmit an operation signal corresponding to the operation of the short-range communication terminal 90 to the working vehicle 1.

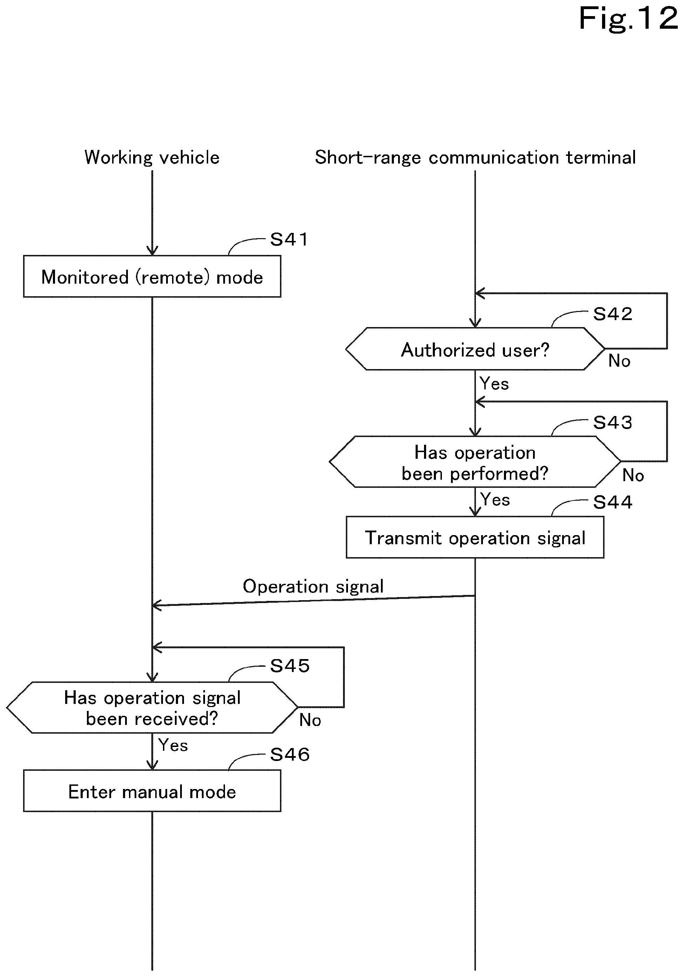

The following description discusses an anti-theft process for the working vehicle 1 in the monitored mode performed by the monitoring system 100, with reference to FIG. 12. FIG. 12 is a flowchart showing the anti-theft process for the working vehicle in the monitored mode.

As shown in FIG. 12, assume that the working vehicle 1 is in the monitored mode in which the working vehicle 1 is allowed to operate under monitoring by the remote communication terminal 50 (S41). The user authenticator 92 of the short-range communication terminal 90 determines whether a person who operates the short-range communication terminal 90 is an authorized user (S42).

For example, when the password entered by the person who operates the short-range communication terminal 90 matches the password of an authorized user stored in the short-range communication terminal 90, the user authenticator 92 determines that the person is the authorized user (YES at S42). On the other hand, when the password does not match the password of an authorized user, the user authenticator 92 determines that the person is not the authorized user (NO at S42). The user authenticator 92 may be configured or programmed to determine whether the person is an authorized user using biometric recognition such as face recognition, fingerprint recognition and/or voice recognition.

On the other hand, when no operation is performed by the person who operates the short-range communication terminal 90 (for example, password is not entered) or nothing is detected (NO at S42), the user authenticator 92 repeats step S42 until an operation is performed or a detection is made.

The short-range communication terminal 90 determines whether an operation is performed by the authorized user (S43). When the short-range communication terminal 90 is operated by the authorized user (YES at S43), the short-range communication terminal 90 transmits an operation signal corresponding to such operation to the working vehicle 1 (S44).

On the other hand, when the short-range communication terminal 90 is not operated by the authorized user (NO at S43), the short-range communication terminal 90 repeats step S43 until the short-range communication terminal 90 is operated.

The controller 60 of the working vehicle 1 determines whether or not the operation signal is received from the short-range communication terminal 90 (S45). When the operation signal is received from the short-range communication terminal 90 (YES at S45), the controller 60 causes a transition to the manual mode even if the permission signal is not received from the remote communication terminal 50. On the other hand, when the operation signal is not received (NO at S45), the controller 60 repeats step S45 until the operation signal is received.

With the above-described configuration, the working vehicle 1 can be brought into the manual mode quickly and easily, and the working vehicle 1 can be controlled using the short-range communication terminal 90 smoothly. It is also possible to eliminate or reduce the likelihood that the short-range communication terminal 90 will be operated by an unauthorized user, and possible to eliminate or reduce the likelihood that the manual mode will be entered by operating the short-range communication terminal 90 in an unauthorized manner.

The communicator 66 of the working vehicle 1 may be configured or programmed to, when the operation signal is received from the short-range communication terminal 90, transmit information indicating that the working vehicle 1 is being controlled by the short-range communication terminal 90 to the remote communication terminal 50, and the remote communication terminal 50 may be operable to provide a notification indicating that the working vehicle 1 is being controlled by the short-range communication terminal 90.

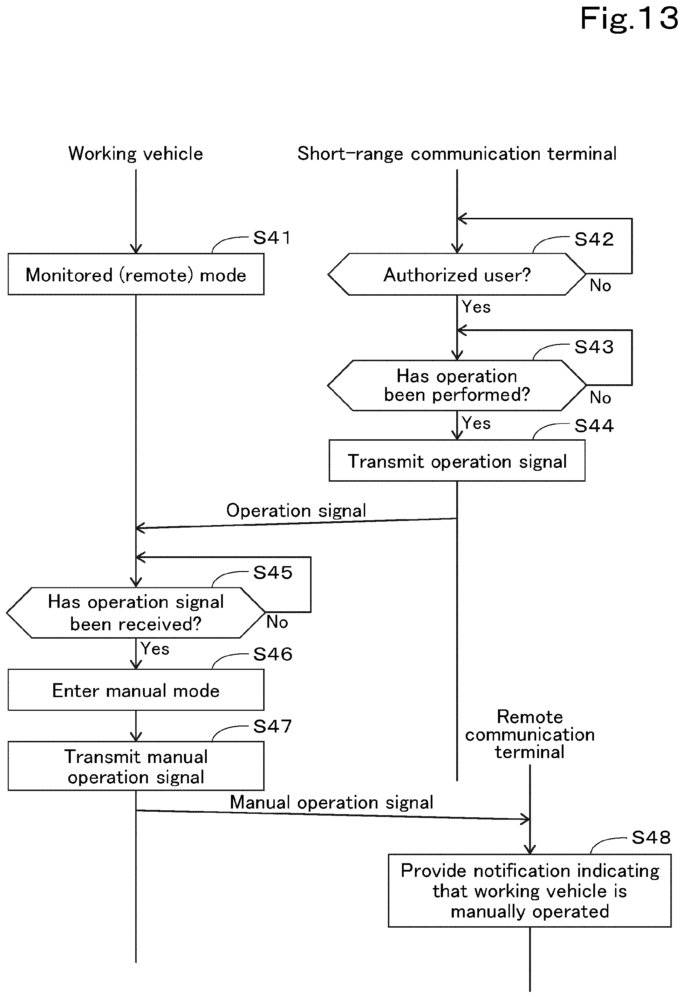

The following description discusses the anti-theft process for the working vehicle 1 in the monitored mode performed by the monitoring system 100, with reference to FIG. 13. FIG. 13 is a flowchart showing another example of the anti-theft process different from FIG. 12. The anti-theft process shown in FIG. 13 differs from the anti-theft process shown in FIG. 12 in that the anti-theft process shown in FIG. 13 includes additional steps S47 and S48. Thus, steps S47 and S48 shown in FIG. 13 will be described in detail.

After S46, the communicator 66 of the working vehicle 1 transmits a manual operation signal indicating that the working vehicle 1 is being controlled by the short-range communication terminal 90 to the remote communication terminal 50 (S47).

The controller 51 of the remote communication terminal 50, upon receiving the manual operation signal via the communicator 54, causes the display 55 to display a notification indicating that the working vehicle 1 is being controlled by the short-range communication terminal 90 (S48).

With the above-described configuration, a person who remotely monitors the working vehicle 1 or a human remote controller of the working vehicle 1 using the remote communication terminal 50 can know that the working vehicle 1 is being controlled by the short-range communication terminal 90.

The controller 60 of the working vehicle 1 may be configured or programmed to unlock the door 11 locked by the locking mechanism 67 when an operation signal is received from the short-range communication terminal 90.

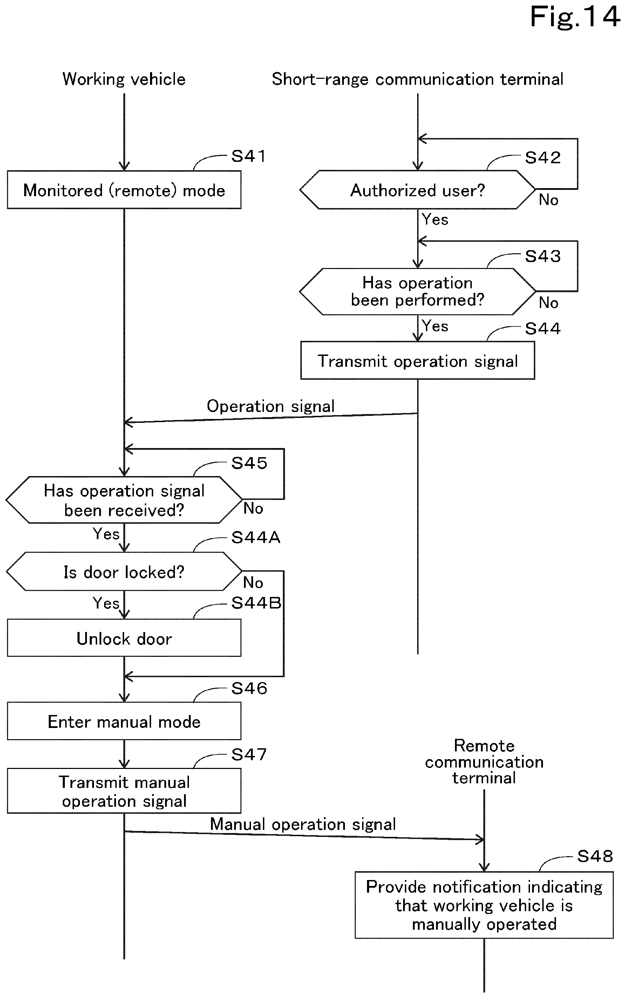

The following description discusses the anti-theft process for the working vehicle 1 in the monitored mode performed by the monitoring system 100, with reference to FIG. 14. FIG. 14 is a flowchart showing another example of the anti-theft process different from FIG. 13. The anti-theft process shown in FIG. 14 differs from the anti-theft process shown in FIG. 13 in that the anti-theft process shown in FIG. 14 includes additional steps S44A and S44B. Thus, steps S44A and S44B shown in FIG. 14 will be described in detail.

After S45, the controller 60 of the working vehicle 1, when the communicator 66 receives the operation signal from the short-range communication terminal 90 (YES at S45), determines whether the locking mechanism 67 is in the lock state, i.e., whether the locking mechanism 67 is locking (whether the door 11 is locked) (S44A). When the locking mechanism 67 is in the lock state (YES at S44A), the controller 60 controls the locking mechanism 67 to enter the unlock state to unlock, i.e., controls the locking mechanism 67 to unlock the door 11 (S44B).

On the other hand, in S44A, when the controller 60 determines that the locking mechanism 67 is not locking (the door 11 is not locked) (NO at S44A), the controller 60 proceeds to step S46.

Steps S46 to S48 shown in FIG. 14 are the same as those shown in FIG. 13, and therefore the description therefor is omitted.

With the above-described configuration, when the short-range communication terminal 90 is operated at a location within a predetermined range from the working vehicle 1, the door 11 of the working vehicle 1 is unlocked, allowing the user to enter the working vehicle 1. Since the owner of the short-range communication terminal 90 is assumed to be an authorized user, even if they are permitted to enter the working vehicle 1, it is highly unlikely that the working vehicle 1 will be stolen.

The controller 60 may be configured or programmed to permit the startup of the prime mover 4 when a user is authenticated as an authorized user by the user authenticator 61a, and not permit the startup of the prime mover 4 when a user is not authenticated as an authorized user.

With the above-described configuration, since the working vehicle 1 is permitted to start up the prime mover 4 only when the user is authenticated as an authorized user, it is possible to eliminate or reduce the likelihood that an unauthorized user will force stop and then restart the prime mover 4 of the working vehicle 1, and eliminate or reduce the likelihood that the working vehicle 1 will be stolen by operating the working vehicle 1 in an unauthorized manner.

### Variations

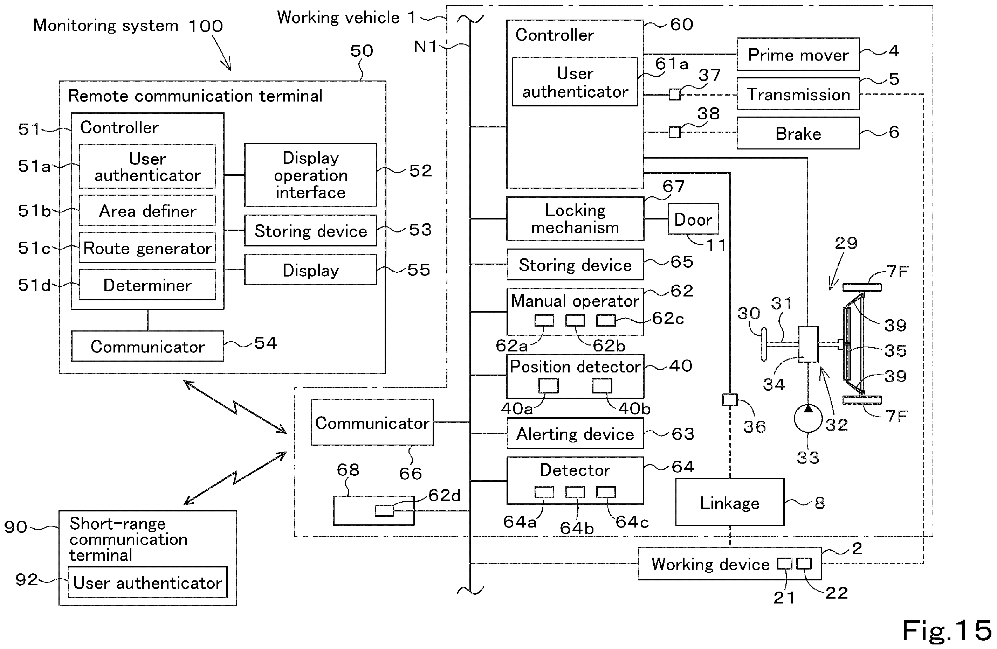

In the above-described example embodiments, the working vehicle 1 includes a switch 62c, but may further include a switch detector 62d as shown in FIG. 15. FIG. 15 is a block diagram of a monitoring system of a variation of an example embodiment of the present invention. The switch detector 62d may be a detecting switch such as a microswitch or a limit switch or a detecting sensor such as a proximity sensor or a contact sensor.

A holder 68 to hold the remote communication terminal 50 is provided at a predetermined portion in the vicinity of the operator's seat 10 inside the cabin 9. The holder 68 includes the switch detector 62d. The switch detector 62d is turned on when the remote communication terminal 50 is stored in the holder 68 (that is, the switch detector 62d detects that the remote communication terminal 50 is stored), and is turned off when the remote communication terminal 50 is not stored in the holder 68 (that is, the switch detector 62d does not detect that the remote communication terminal 50 is stored). In this case, at S6 shown in FIGS. 7 to 11, the process proceeds to S7 if the switch is operated or the switch detector 62d is turned on, and step S6 is repeated if the switch is not operated and the switch detector 62d is off.

The working vehicle 1 may include the switch detector 62d instead of the switch 62c. In this case, at S6 shown in FIGS. 7 to 11, whether or not the switch detector 62d is on is determined instead of "whether or not the switch is operated", and the process proceeds to S7 if the switch detector 62d is on, and step S6 is repeated if switch detector 62d is off.

The cabin 9 may include a housing to house the remote communication terminal 50, a support to support the remote communication terminal 50, a mount for placement of the remote communication terminal 50 or the like instead of the holder 68, and the switch detector 62d provided in or on any of those described above may detect that the remote communication terminal 50 is housed, supported or placed.

Main features of and effects achieved by monitoring systems 100 in the above-described example embodiments and the like are as follows.

(Item A1) A monitoring system 100 including a remote communication terminal 50, and a working vehicle 1 including a monitored mode in which a monitored operation monitored by the remote communication terminal 50 is allowed and a manual mode in which a manual operation is allowed, wherein the working vehicle 1 includes a controller 60 configured or programmed to, upon receiving a permission signal from the remote communication terminal 50 when the working vehicle 1 is in the monitored mode, bring the working vehicle 1 into a permission mode in which the monitored mode is allowed to transition to the manual mode.

With this configuration, it is possible to eliminate or reduce the likelihood that the working vehicle 1 will be changed from the monitored mode to the manual mode in an unauthorized manner, making it possible to eliminate or reduce the likelihood that the working vehicle 1 in the monitored mode will be stolen.

(Item A2) The monitoring system 100 according to item A1, wherein the monitored mode includes a remote mode in which an automatic operation or a remote operation remotely monitored by the remote communication terminal 50 is allowed.

With this configuration, it is possible to eliminate or reduce the likelihood that the working vehicle 1 will be changed from the remote mode to the manual mode in an unauthorized manner, making it possible to eliminate or reduce the likelihood that the working vehicle 1 in the remote mode will be stolen.

(Item A3) The monitoring system 100 according to items A1 or A2, wherein the controller 60 is configured or programmed to cause a transition to the manual mode when an operation is performed or a detection is made to cause a transition to the manual mode while the working vehicle 1 is in the permission mode.

With this configuration, in order to bring the working vehicle 1 into the manual mode, it is necessary that the working vehicle 1 receive a permission signal from the remote communication terminal 50 and enter the permission mode and that an operation (for example, the operation of the switch 62c) or a detection (for example, the detection by the switch detector 62b) be made to cause a transition to the manual mode. Thus, it is possible to further reduce the likelihood that the manual mode will be entered in an unauthorized manner, making it possible to eliminate or reduce the likelihood that the working vehicle 1 in the remote mode will be stolen.

(Item A4) The monitoring system 100 according to any one of items A1 to A3, wherein the working vehicle 1 includes a sensor 64b to detect an entrance of a person into the working vehicle, and a communicator 66 to transmit an entrance detection signal to the remote communication terminal 50 upon detection of the entrance by the sensor 64b, and the remote communication terminal 50 includes a determiner 51d to determine whether or not to cause a transition to the permission mode when receiving the entrance detection signal while the working vehicle 1 is in the remote mode.

With this configuration, when a person has entered the working vehicle 1 in the remote mode, whether or not to cause a transition to the permission mode is determined, and the manual mode is not entered when it is determined to not cause a transition to the permission mode. This makes it possible to eliminate or reduce the likelihood that the working vehicle 1 in the remote mode will be stolen.

(Item A5) The monitoring system 100 according to item A4, wherein the working vehicle 1 includes an imager 64c to capture an image of the person upon detection of the entrance by the sensor 64b, the communicator 66 is configured or programmed to transmit the entrance detection signal and the captured image of the person captured by the imager 64b to the remote communication terminal 50 upon detection of the entrance by the sensor 64b, and the determiner 51d is configured or programmed to determine whether or not to cause a transition to the permission mode based on the entrance detection signal and the captured image.

With this configuration, when a person has entered the working vehicle 1 in the remote mode, whether or not to cause a transition to the permission mode is determined based on the captured image of the person captured by the imager 64c, and the manual mode is not entered when it is determined to not cause a transition to the permission mode. Thus, it is possible to eliminate or reduce the likelihood that the working vehicle 1 in the remote mode will be stolen.

(Item A6) The monitoring system according to item A5, wherein the remote communication terminal 50 includes a display 55 to display the captured image, and the determiner 51d is configured or programmed to determine whether or not to cause a transition to the permission mode according to a selecting instruction from a user of the remote communication terminal 50 who has checked the captured image.

With this configuration, when a person has entered the working vehicle 1 in the remote mode, a remote user can check the captured image of the person displayed on the display 55, and whether or not to cause a transition to the permission mode is determined. The permission mode is not entered when the remote user checking the captured image of the person provides a non-permitting instruction (that is, when it is determined by the determiner 51d to not cause a transition to the permission mode), and therefore the manual mode is not entered. Thus, an instruction for permission or non-permission is given after the remote user checks the captured image of the person, making it possible to eliminate or reduce the likelihood that the working vehicle 1 in the remote mode will be stolen.

(Item A7) The monitoring system according to item A5, wherein the determiner 51d is configured or programmed to determine whether or not to cause a transition to the permission mode based on a result of image recognition of the captured image.

With this configuration, when the person in the captured image is not an authorized user based on a result of the image recognition of the captured image of the person, that is, based on an image analysis of the captured image, the permission mode is not entered, and therefore the manual mode is not entered. Thus, the permission mode is entered only when the user is authenticated as an authorized user by the automatic determination by the determiner 51d, making it possible to eliminate or reduce the likelihood that the working vehicle 1 in the remote mode will be stolen.

(Item A8) The monitoring system 100 according to any one of items A1 to A7, wherein the remote communication terminal 50 includes a user authenticator 51a, and is allowed to be operated when a user is authenticated as an authorized user by the user authenticator 51a.

With this configuration, the remote communication terminal 50 is allowed to be operated when the user is authenticated as an authorized user, and therefore it is possible to prevent or reduce the likelihood that the remote communication terminal 50 will be operated by an unauthorized user and eliminate or reduce the likelihood that the manual mode will be entered by operating the remote communication terminal 50 in an unauthorized manner. Thus, it is possible to eliminate or reduce the likelihood that the working vehicle will be stolen by operating the remote communication terminal 50 in an unauthorized manner.

(Item A9) The monitoring system 100 according to item A2, further comprising a short-range communication terminal 90 to control the working vehicle 1 from a location within a predetermined range from the working vehicle 1, wherein the working vehicle 1 includes a communicator 66 to communicate with the short-range communication terminal 90, and the controller 60 is configured or programmed to cause a transition from the remote mode to the manual mode upon receiving an operation signal from the short-range communication terminal 90 via the communicator 66 even when the controller 60 has not received the permission signal from the remote communication terminal 50.

With this configuration, when the short-range communication terminal 90 is operated at a location within the predetermined range from the working vehicle 1, the mode of the working vehicle 1 is changed from the remote mode to the manual mode even if no permission signals are received from the remote communication terminal 50. Thus, it is possible to bring the working vehicle 1 into the manual mode quickly and easily, and possible to smoothly control the working vehicle 1 using the short-range communication terminal 90. Furthermore, since the person who owns the short-range communication terminal 90 is assumed to be an authorized user, it is still possible to eliminate or reduce the likelihood that the working vehicle 1 will be stolen.

(Item A10) The monitoring system 100 according to item A9, wherein the short-range communication terminal 90 includes a user authenticator 92, and is operable to transmit an operation signal corresponding to an operation of the short-range communication terminal 90 to the working vehicle 1 when a user is authenticated as an authorized user by the user authenticator 92.

With this configuration, the short-range communication terminal 90 transmits the operation signal corresponding to the operation to the working vehicle 1 when the user is authenticated as an authorized user. In other words, the short-range communication terminal 90 does not transmit the operation signal to the working vehicle 1 when the user is not authenticated as an authorized user. Thus, it is possible to eliminate or reduce the likelihood that the short-range communication terminal 90 will be operated by an unauthorized user, and possible to eliminate or reduce the likelihood that the manual mode will be entered by operating the short-range communication terminal 90 in an unauthorized manner. Thus, it is possible to eliminate or reduce the likelihood that the working vehicle 1 will be stolen by operating the short-range communication terminal 90 in an unauthorized manner.

(Item A11) The monitoring system 100 according to items A9 or A10, wherein the communicator 66 is configured or programmed to transmit information indicating that the working vehicle is being controlled by the short-range communication terminal 90 to the remote communication terminal 50 upon receiving the operation signal from the short-range communication terminal 90, and the remote communication terminal 50 is operable to provide a notification indicating that the working vehicle 1 is being controlled by the short-range communication terminal 90.

With this configuration, the remote communication terminal 50 provides a notification indicating that the working vehicle is being controlled by the short-range communication terminal 90, and therefore a human remote monitor or a human remote controller using the remote communication terminal 50 can know that the working vehicle 1 is being controlled by the short-range communication terminal 90.

(Item A12) The monitoring system 100 according to item A2, wherein the working vehicle 1 includes a door 11 for entrance and exit and a locking mechanism 67 to lock the door 11, and the controller 60 is configured or programmed to control the locking mechanism 67 to lock the door 11 based on an instruction to enter the remote mode issued by the remote communication terminal 50.

With this configuration, when the working vehicle 1 enters the remote mode, the door 11 for entrance and exit is locked, making it possible to eliminate or reduce the likelihood that someone will enter the working vehicle 1 in the remote mode in an unauthorized manner. Thus, it is possible to eliminate or reduce the likelihood that someone will enter the working vehicle 1 and cause a transition to the manual mode in an unauthorized manner. This makes it possible to more reliably eliminate or reduce the likelihood that the working vehicle 1 in the remote mode will be stolen.

(Item A13) The monitoring system 100 according to item A12, wherein the controller 60 is configured or programmed to unlock the door 11 locked by the locking mechanism 67 based on an unlocking signal from the remote communication terminal 50.

With this configuration, it is necessary to unlock the door 11 of the working vehicle 1 using the remote communication terminal 50, thus making it possible to eliminate or reduce the likelihood that the working vehicle 1 in the remote mode will be stolen.

(Item A14) The monitoring system 100 according to item A12, wherein the working vehicle 1 includes a sensor 64b to detect an entrance of a person into the working vehicle, and the controller 60 is configured or programmed to not lock the door 11 by the locking mechanism 67 when the entrance is detected by the sensor 64b even when an instruction to enter the remote mode is issued by the remote communication terminal 50.

With this configuration, the door is not locked when a person is in the working vehicle 1, and therefore it is possible to eliminate or reduce the likelihood that the person will be locked in the working vehicle 1.

(Item A15) The monitoring system 100 according to item A12 or A13, further comprising a short-range communication terminal 90 to control the working vehicle 1 from a location within a predetermined range from the working vehicle 1, wherein the controller 60 is configured or programmed to unlock the door 11 locked by the locking mechanism 67 upon receiving an operation signal from the short-range communication terminal 90.

With this configuration, when the short-range communication terminal 90 is operated at a location within the predetermined range from the working vehicle 1, the door 11 of the working vehicle 1 is unlocked, allowing a person to enter the working vehicle 1. Furthermore, since the person who owns the short-range communication terminal 90 is assumed to be an authorized user, it is highly unlikely that the working vehicle 1 will be stolen even if the entrance of the person into the working vehicle 1 is permitted.

(Item A16) The monitoring system 100 according to any one of items A1 to A15, wherein the working vehicle 1 includes a prime mover 4 and a user authenticator 61a, and the controller 60 is configured or programmed to permit startup of the prime mover 4 when a user is authenticated as an authorized user by the user authenticator 61a, and not permit the startup of the prime mover 4 when the user is not authenticated as an authorized user.

With this configuration, since the working vehicle 1 permits the startup of the prime mover 4 only when the user is authenticated as an authorized user, it is possible to eliminate or reduce the likelihood that the an unauthorized user will force-stop and then restart the prime mover 4 of the working vehicle 1, making it possible to eliminate or reduce the likelihood that the working vehicle 1 will be stolen by operating the working vehicle 1 in an unauthorized manner.

In above-described example embodiments, the short-range communication terminal 90 is, for example a remote controller, but this does not imply any limitation. For example, the short-range communication terminal 90 may be a tablet terminal device, a smartphone or the like.

While example embodiments of the present invention have been described above, it is to be understood that variations and modifications will be apparent to those skilled in the art without departing from the scope and spirit of the present invention. The scope of the present invention, therefore, is to be determined solely by the following claims.

## Claims

1. A monitoring system (100) comprising:
a remote communication terminal (50); and
a working vehicle (1) including a monitored mode in which a monitored operation monitored by the remote communication terminal (50) is allowed and a manual mode in which a manual operation is allowed; wherein
the working vehicle (1) includes a controller (60) configured or programmed to, upon receiving a permission signal from the remote communication terminal (50) when the working vehicle (1) is in the monitored mode, bring the working vehicle (1) into a permission mode in which the monitored mode is allowed to transition to the manual mode.

2. The monitoring system (100) according to claim 1, wherein the monitored mode includes a remote mode in which an automatic operation or a remote operation remotely monitored by the remote communication terminal (50) is allowed.

3. The monitoring system (100) according to claim 2, wherein the controller (60) is configured or programmed to cause a transition to the manual mode when an operation is performed or a detection is made to cause a transition to the manual mode while the working vehicle (1) is in the permission mode.

4. The monitoring system (100) according to claim 2 or 3, wherein
the working vehicle (1) includes:
a sensor (64b) to detect an entrance of a person into the working vehicle; and
a communicator (66) to transmit an entrance detection signal to the remote communication terminal (50) upon detection of the entrance by the sensor (64b); and
the remote communication terminal (50) includes a determiner to determine whether or not to cause a transition to the permission mode when receiving the entrance detection signal while the working vehicle (1) is in the remote mode.

5. The monitoring system (100) according to claim 4, wherein
the working vehicle (1) includes an imager (64c) to capture an image of the person upon detection of the entrance by the sensor (64b);
the communicator (66) is configured or programmed to transmit the entrance detection signal and the captured image of the person captured by the imager (64c) to the remote communication terminal (50) upon detection of the entrance by the sensor (64b); and
the determiner (51d) is configured or programmed to determine whether or not to cause a transition to the permission mode based on the entrance detection signal and the captured image.

6. The monitoring system (100) according to claim 5, wherein
the remote communication terminal (50) includes a display (55) to display the captured image; and
the determiner (51d) is configured or programmed to determine whether or not to cause a transition to the permission mode according to a selecting instruction from a user of the remote communication terminal (50) who has checked the captured image.

7. The monitoring system (100) according to claim 5, wherein the determiner (51d) is configured or programmed to determine whether or not to cause a transition to the permission mode based on a result of image recognition of the captured image.

8. The monitoring system (100) according to any one of claims 1 to 7, wherein the remote communication terminal (50) includes a user authenticator (51a), and is allowed to be operated when a user is authenticated as an authorized user by the user authenticator (51a).

9. The monitoring system (100) according to claim 2, further comprising:
a short-range communication terminal (90) to control the working vehicle (1) from a location within a predetermined range from the working vehicle (1); wherein
the working vehicle (1) includes a communicator (66) to communicate with the short-range communication terminal (90); and
the controller (60) is configured or programmed to cause a transition from the remote mode to the manual mode upon receiving an operation signal from the short-range communication terminal (90) via the communicator (66) even when the controller (60) has not received the permission signal from the remote communication terminal (50).

10. The monitoring system (100) according to claim 9, wherein
the short-range communication terminal (90) includes a user authenticator (92), and is operable to transmit an operation signal corresponding to an operation of the short-range communication terminal (90) to the working vehicle (1) when a user is authenticated as an authorized user by the user authenticator (92).

11. The monitoring system (100) according to claim 9 or 10, wherein
the communicator (66) is configured or programmed to transmit information indicating that the working vehicle is being controlled by the short-range communication terminal (90) to the remote communication terminal (50) upon receiving the operation signal from the short-range communication terminal (90); and
the remote communication terminal (50) is operable to provide a notification indicating that the working vehicle is being controlled by the short-range communication terminal (90).

12. The monitoring system (100) according to claim 2, wherein
the working vehicle (1) includes a door (11) for entrance and exit and a locking mechanism (67) to lock the door (11); and
the controller (60) is configured or programmed to control the locking mechanism (67) to lock the door (11) based on an instruction to enter the remote mode issued by the remote communication terminal (50).

13. The monitoring system (100) according to claim 12, wherein the controller (60) is configured or programmed to unlock the door (11) locked by the locking mechanism (67) based on an unlocking signal from the remote communication terminal (50).

14. The monitoring system (100) according to claim 12 or 13, further comprising a short-range communication terminal (90) to control the working vehicle (1) from a location within a predetermined range from the working vehicle (1); wherein
the controller (60) is configured or programmed to unlock the door (11) locked by the locking mechanism (67) upon receiving an operation signal from the short-range communication terminal (90).

15. The monitoring system (100) according to any one of claims 1 to 14, wherein
the working vehicle (1) includes a prime mover (4) and a user authenticator (61a); and
the controller (60) is configured or programmed to permit startup of the prime mover (4) when a user is authenticated as an authorized user by the user authenticator (61a), and not permit the startup of the prime mover (4) when the user is not authenticated as an authorized user.
